# EUROPÄISCHE PATENTSCHRIFT

(11) **EP 2 107 269 B1**
(45) Veröffentlichungstag und Bekanntmachung des Hinweises auf die Patenterteilung: **06.06.2012**
(21) Anmeldenummer: 09156124.1
(22) Anmeldetag: 25.03.2009
(51) Int. Cl.: F16F 15/16

(54) **Torsionsschwingungsdämpfer, insbesondere für den Antriebsstrang eines Fahrzeugs**
Torsional oscillation dampener, in particular for the power transmission of a vehicle
Amortisseur des vibrations de torsion, en particulier pour la transmission d'un véhicule

(30) Priorität: 05.04.2008 DE 102008017402
(43) Veröffentlichungstag der Anmeldung: 07.10.2009
(73) Patentinhaber: ZF Friedrichshafen AG, 88038 Friedrichshafen (DE)
(72) Erfinder: Dögel, Thomas, 97688, Bad Kissingen (DE); Fambach, Ralf, 97453, Schonungen (DE); Feldhaus, Reinhard, 97502, Euerbach (DE); Orlamünder, Andreas, 97453, Schonungen (DE); Schade, Thomas, 97464, Niederwerrn (DE); Zinßmeister, Horst, 67663, Kaiserslautern (DE)

(56) Entgegenhaltungen:
- EP-A- 0 303 239
- EP-A- 1 818 566
- WO-A-2008/080485
- DE-A1-102005 058 531

## Beschreibung

Die vorliegende Erfindung betrifft einen Torsionsschwingungsdämpfer, insbesondere für den Antriebsstrang eines Fahrzeugs, umfassend eine Primärseite und eine gegen die Wirkung einer Dämpferanordnung bezüglich der Primärseite um eine Drehachse drehbare Sekundärseite, wobei die Dämpferanordnung zwei Fluiddruckspeicheranordnungen sowie eine Förderanordnung umfasst, welche bei Relativdrehung der Primärseite bezüglich der Sekundärseite in einer ersten Relativdrehrichtung den Fluidspeicherdruck in einer ersten der Fluiddruckspeicheranordnungen erhöht und durch Relativdrehung der Primärseite bezüglich der Sekundärseite in einer der ersten Relativdrehrichtung entgegengesetzten zweiten Relativdrehrichtung den Fluidspeicherdruck in einer zweiten der Fluiddruckspeicheranordnungen erhöht, wobei jede Fluiddruckspeicheranordnung wenigstens eine Fluiddruckspeichereinheit mit durch die Förderanordnung förderbarem erstem Fluid umfasst, wie im Oberbegriff des Anspruchs 1 definiert.

Aus der EP 1818566 A2 ist eine Drehschwingungsdämpfungseinrichtung bekannt, bei welcher eine als Fördereinrichtung wirksame Verdrängerpumpe abhängig von der Relativdrehung Fluid zwischen einer Primärseite und einer Sekundärseite zwischen zwei Druckspeicheranordnungen hin und her fördert. Je nach Förderrichtung wird der Druck in einer der Druckspeicheranordnungen erhöht, während der Druck in der anderen Druckspeicheranordnung gemindert wird. Ein Problem bei derartigen Systemen ist, dass durch das hin- und her Fördern des Fluids, beispielsweise Öl oder einer sonstigen im Wesentlichen inkompressiblen Flüssigkeit, und das damit einhergehende zunehmende Spannen bzw. Entspannen eines jeweiligen Druckspeichers dafür gesorgt sein muss, dass in einem neutralen, also drehmomentenmäßig im Wesentlichen nicht belasteten Zustand, die beiden Druckspeicheranordnungen jeweils vergleichsweise stark vorgespannt sind, um eine beim zunehmenden Belasten einer der Druckspeicheranordnungen entsprechende Entlastung bzw. Entspannung der anderen Druckspeicheranordnung zuzulassen. Eine vergleichsweise starke Vorspannung bedeutet jedoch eine Minderung der Entkopplungsgüte. Ein weiteres Problem besteht darin, dass durch den Einsatz beispielsweise einer Zahnradpumpe beim Hin- und Herfördern des ersten Fluids zwischen den beiden Fluiddruckspeicheranordnungen eine Leckage vorhanden ist, die zu einem Wirkungsgradverlust und mithin ebenfalls einer Beeinträchtigung der Entkopplungsgüte führt.

Die nachveröffentlichte WO 2008/080485 A1 offenbart einen Torsionsschwingungsdämpfer, bei welchem die zweites, also komprimierbares Fluid enthaltenen Volumina von Fluiddruckspeichereinheiten miteinander in Fluidaustauschverbindung stehen.

Die EP 030 239 A2 offenbart einen Drehschwingungsdämpfer, bei welchem eine Fluidförderanordnung zum Fördern von Fluid zwischen mehreren Speicherkammem als mit unbegrenztem Drehwinkelbereich arbeitende Zahnradpumpe ausgebildet ist.

Es ist die Aufgabe der vorliegenden Erfindung, einen Torsionsschwingungsdämpfer vorzusehen, welcher bei einfachem und kompaktem Aufbau eine verbesserte Entkopplungsgüte bereitstellt.

Erfindungsgemäß wird diese Aufgabe gelöst durch einen Torsionsschwingungsdämpfer, insbesondere für den Antriebsstrang eines Fahrzeugs, umfassend eine Primärseite und eine gegen die Wirkung einer Dämpferanordnung bezüglich der Primärseite um eine Drehachse drehbare Sekundärseite, wobei die Dämpferanordnung zwei Fluiddruckspeicheranordnungen sowie eine Förderanordnung umfasst, welche durch Relativdrehung der Primärseite bezüglich der Sekundärseite in einer ersten Relativdrehrichtung den Fluidspeicherdruck in einer ersten der Fluiddruckspeicheranordnung erhöht und bei Relativdrehung der Primärseite bezüglich der Sekundärseite in einer der ersten Relativdrehrichtung entgegengesetzten zweiten Relativdrehrichtung den Fluidspeicherdruck in einer zweiten der Fluiddruckspeicheranordnungen erhöht, wobei jede Fluiddruckspeicheranordnung wenigstens eine Fluiddruckspeichereinheit mit durch die Förderanordnung förderbarem erstem Fluid umfasst, wobei bei wenigstens einer Fluiddruckspeicheranordnung ein Fluidströmungsweg des ersten Fluids zwischen der Förderanordnung und wenigstens einer Fluiddruckspeichereinheit über eine Ventilanordnung in und außer Verbindung mit einem Reservoir für erstes Fluid bringbar ist.

Dieser Torsionsschwingungsdämpfer ist dadurch gekennzeichnet, dass die Ventilanordnung in Abhängigkeit des Drucks des ersten Fluids in dem Fluidströmungsweg zwischen der Förderanordnung und wenigstens einer Fluiddruckspeichereinheit der anderen Fluiddruckspeicheranordnung schaltbar ist, oder/und dass die Ventilanordnung in Abhängigkeit von der Relativdrehung der Primärseite bezüglich der Sekundärseite schaltbar ist.

Durch die Schaltbarkeit einer derartigen Ventilanordnung in Abhänigigkeit von dem Fluidspeicherdrücken bzw. in Abhängigkeit von der Relativdrehung der Primärseite bezüglich der Sekundärseite wird es möglich, das Fluiddruckspeicherverhalten bzw. das Dämpfungsverhalten stark zu beeinflussen, um somit abhängig vom momentanen Betriebszustand auch eine Beeinflussung des Entkopplungsverhaltens erreichen zu können.

Beispielsweise kann vorgesehen sein, dass dann, wenn der Druck des ersten Fluids im Fluidströmungsweg der anderen Fluiddruckspeicheranordnung unter dem Druck des ersten Fluids in dem Fluidströmungsweg der einen Fluiddruckspeicheranordnung liegt, die Ventilanordnung die Verbindung zwischen dem Fluidströmungsweg der einen Fluiddruckspeicheranordnung und dem Reservoir unterbricht, wobei weiterhin dann die Ventilanordnung die Verbindung zwischen dem Fluidströmungsweg der anderen Fluiddruckspeicheranordnung und dem Reservoir freigibt.

Das Reservoir kann in einem die Primärseite und die Sekundärseite wenigstens teilweise enthaltenden Gehäuse gebildet sein. Auf diese Art und Weise kann das Bereitstellen von Drehdurchführungen vermieden werden und im Bereich des Torsionsschwingungsdämpfers an bezüglich einander sich bewegbaren Bauteilen möglicherweise auftretende Leckagen können vollständig wieder in den Fluidkreislauf zurückgeführt werden.

Alternativ ist es selbstverständlich auch möglich, dass das Reservoir über eine Drehdurchführung in Verbindung mit dem Fluidströmungsweg wenigstens einer Fluiddruckspeicheranordnung in Verbindung steht oder bringbar ist.

Die Ventilanordnung kann an der Primärseite oder der Sekundärseite vorgesehen sein, also im rotierenden Systembereich eines derartigen Torsionsschwingungsdämpfers. Auch hier kann alternativ die Ventilanordnung so positioniert sein, dass sie mit der Primärseite und der Sekundärseite nicht um die Drehachse rotiert.

Die Ventilanordnung kann in Zuordnung zu jeder Fluiddruckspeicheranordnung eine Ventileinheit umfassen, die also baulich getrennt auch an verschiedenen Positionen innerhalb eines Systems untergebracht sein können.

Alternativ ist es jedoch auch möglich, dass die Ventilanordnung eine die Verbindung zwischen den Fluidströmungswegen der beiden Fluiddruckspeicheranordnungen und dem Reservoir herstellende und unterbrechende Ventileinheit umfasst.

Auch bei dieser Ausgestaltungsvariante kann vorgesehen sein, dass wenigstens eine Fluiddruckspeichereinheit ferner durch das erste Fluid belastbares, komprimierbares zweites Fluid umfasst. Die Rückstellkraft wird also in einem derartigen Torsionsschwingungsdämpfer dann durch ein komprimierbares bzw. komprimiertes Fluid bereitgestellt. Es sei hier darauf hingewiesen, dass diese Rückstellkraft selbstverständlich auch durch einen komprimierbaren Festkörper, wie z. B. eine Schraubendruckfeder, ein Elastomermaterial oder dergleichen, erzeugt werden kann. Je nach Auswahl des Materials bzw. auch der Formgebung desselben kann damit die Druckspeichercharakteristik stark beeinflusst werden.

Weiter kann bei dem erfindungsgemäßen Torsionsschwingungsdämpfer vorgesehen sein, dass die Fluidförderanordnung eine durch Relativdrehung der Primärseite bezüglich der Sekundärseite aktivierbare Pumpanordnung umfasst, deren Förderrichtung von der Relativdrehrichtung zwischen der Primärseite und der Sekundärseite abhängt.

Gemäß einem weiteren besonders vorteilhaften Aspekt kann weiterhin vorgesehen sein, dass die Fluidförderanordnung in einem unbegrenzten Relativdrehwinkelbereich zwischen Primärseite und Sekundärseite arbeitet.

Beispielsweise kann die Fluidförderanordnung eine Zahnradpumpe oder eine Flügelzellenpumpe umfassen.

Die Fluiddruckspeichereinheiten der Fluiddruckspeicheranordnungen können die Fluidförderanordnung sternartig umgebend angeordnet sein, was zu einer sehr kompakten axialen Bauweise beiträgt.

Jede Fluiddruckspeicheranordnung kann ferner durch das erste Fluid belastbares, komprimierbares zweites Fluid umfassen.Dabei ist weiter vorgesehen, dass von wenigstens einer Fluiddruckspeichereinheit der ersten Fluiddruckspeicheranordnung und wenigstens einer Fluiddruckspeichereinheit der zweiten Fluiddruckspeicheranordnung zweites Fluid enthaltende Volumina miteinander in Fluidaustauschverbindung stehen.

Durch die Kopplung der zweites, kompressibles Fluid enthaltenden Volumina zweier Fluiddruckspeichereinheiten verschiedener Fluiddruckspeicheranordnungen wird es möglich, einen Relativdrehwinkelbereich zu generieren, in welchem im Wesentlichen nur erstes Fluid zwischen den beiden Fluiddruckspeicheranordnungen umgewälzt wird, eine Erhöhung des Drucks des zweiten Fluids in den dieses enthaltenen Volumina aber nicht auftritt. Erst dann, wenn ein bestimmter Grenzdrehwinkel überschritten ist, wird dieses zweite Fluid zunehmend unter Druck gesetzt, was zu einer entsprechenden Druckspeicherfunktionalität führt.

Um das Fluiddruckspeichervermögen noch weiter zu verbessern, wird vorgeschlagen, dass wenigstens eine Fluiddruckspeicheranordnung wenigstens eine Fluiddruckspeichereinheit aufweist, deren zweites Fluid enthaltendes Volumen nicht in Fluidaustauschverbindung mit einem zweites Fluid enthaltenden Volumen einer Fluiddruckspeichereinheit der anderen Fluiddruckspeicheranordnung steht.

Die Dämpfungscharakteristik, also der Abbau von Schwingungsenergie durch Bewegungswiderstände, kann dadurch gestärkt werden, dass bei wenigstens einer Fluiddruckspeicheranordnung im Fluidströmungsweg des ersten Fluids zwischen der Förderanordnung und wenigstens einer Fluiddruckspeichereinheit eine Drosselanordnung vorgesehen ist.

Um die beiden bei einem erfindungsgemäßen Torsionsschwingungsdämpfer wirksamen Fluide zuverlässig voneinander zu trennen, wird vorgeschlagen, dass wenigstens die Fluiddruckspeichereinheiten der beiden Fluiddruckspeicheranordnungen, deren zweites Fluid enthaltende Volumina miteinander in Fluidaustauschverbindung stehen, jeweils ein das erste Fluid von dem zweiten Fluid trennendes und druckabhängig verlagerbares oder verformbares Trennelement umfassen. Dabei kann vorgesehen sein, dass das Trennelement zwischen zwei Maximal-Verfagerungszuständen oder/und Maximal-Verformungszuständen bewegbar ist.

Gemäß einem weiteren Aspekt betrifft die vorliegende Erfindung ein Verfahren zum Betreiben eines erfindungsgemäß aufgebauten Torsionsschwingungsdämpfers, welcher im Drehmomentübertragungsweg zwischen einem Antriebsaggregat und einer Getriebeanordnung angeordnet ist, in einer Anfahrphase, bei welchem Verfahren bei im Wesentlichen still stehendem Fahrzeug die Fluidstömungswege beider Fluiddruckspeicheranordnungen mit dem Reservoir verbunden werden und zum Anfahren des Fahrzeugs die Ventilanordnung zum Unterbrechen der Verbindung wenigstens eines Fluidströmungswegs mit dem Reservoir angesteuert wird.

Bei dieser Vorgehensweise wird es also möglich, den Torsionsschwingungsdämpfer als Anfahrelement zu nutzen. Sind beide Fluidströmungswege mit dem Reservoir verbunden, wird im Wesentlichen nur Fluid umgewälzt und kein Druckanstieg in einer der Fluiddruckspeicheranordnungen erzeugt. Erst dann, wenn zumindest eine der Ventilanordnung in Richtung Schließen, also Unterbrechen der jeweiligen Verbindung angesteuert wird, wird ein Druck aufgebaut und somit der Torsionsschwingungsdämpfer in einen Zustand gebracht, in welchem er ein Drehmoment zwischen Primärseite und Sekundärseite übertragen kann.

Dabei ist vorzugsweise vorgesehen, dass die Ventilanordnung zum Unterbrechen der Verbindung desjenigen Fluidströmungswegs mit dem Reservoir angesteuert wird, in welchen die Fluidförderanordnung bei im Wesentlichen still stehendem Fahrzeug Fluid fördert.

Die vorliegende Erfindung wird nachfolgend mit Bezug auf die beiliegenden Figuren detailliert erläutert. Es zeigt:
- Fig. 1: eine Querschnittsansicht eines Torsionsschwingungsdämpfers;
- Fig. 2: eine Darstellung eines Antriebssystems mit einem Torsions- schwingungsdämpfer im Drehmomentübertragungsweg zwi- schen einem Antriebsaggregat und einem Getriebe;
- Fig. 3: in prinzipartiger Darstellung den Aufbau bzw. auch die Wirkungs- weise des Torsionsschwingungsdämpfers der Fig. 1;
- Fig. 4: in vergrößerter Darstellung das Zusammenwirken zweier Verzah- nungen der bei dem Torsionsschwingungsdämpfer der Fig. 1 eingesetzten Zahnradpumpe;
- Fig. 5: in prinzipartiger Darstellung den Aufbau und die Wirkungsweise eines Torsionsschwingungsdämpfers;
- Fig. 6: in prinzipartiger Darstellung den Aufbau und die Wirkungsweise eines Torsionsschwingungsdämpfers;
- Fig. 7: in prinzipartiger Darstellung den Aufbau und die Wirkungsweise eines Torsionsschwingungsdämpfers;
- Fig. 8: in prinzipartiger Darstellung den Aufbau und die Wirkungsweise eines Torsionsschwingungsdämpfers;
- Fig. 9: in vergrößerter Darstellung zwei Fluiddruckspeichereinheiten, de- ren komprimierbaren Fluid enthaltende Volumina miteinander verbunden sind;
- Fig. 10: eine prinzipartige Darstellung eines erfindungsgemäß aufgebauten Torsionsschwingungsdämpfers;
- Fig. 11: eine weitere prinzipartige Darstellung eines erfindungsgemäß aufgebauten Torsionsschwingungsdämpfers;
- Fig. 12: eine weitere prinzipartige Darstellung eines erfindungsgemäß aufgebauten Torsionsschwingungsdämpfers;
- Fig. 13: eine weitere prinzipartige Darstellung eines erfindungsgemäß aufgebauten Torsionsschwingungsdämpfers;
- Fig. 14: eine weitere prinzipartige Darstellung eines erfindungsgemäß aufgebauten Torsionsschwingungsdämpfers;
- Fig. 15: eine weitere prinzipartige Darstellung eines erfindungsgemäß aufgebauten Torsionsschwingungsdämpfers;
- Fig. 16: eine weitere prinzipartige Darstellung eines erfindungsgemäß aufgebauten Torsionsschwingungsdämpfers;
- Fig. 17: eine weitere prinzipartige Darstellung eines erfindungsgemäß aufgebauten Torsionsschwingungsdämpfers;
- Fig. 18: eine weitere prinzipartige Darstellung eines erfindungsgemäß aufgebauten Torsionsschwingungsdämpfers;
- Fig. 19: eine weitere prinzipartige Darstellung eines erfindungsgemäß aufgebauten Torsionsschwingungsdämpfers; und
- Fig. 20: eine weitere prinzipartige Darstellung eines erfindungsgemäß aufgebauten Torsionsschwingungsdämpfers.

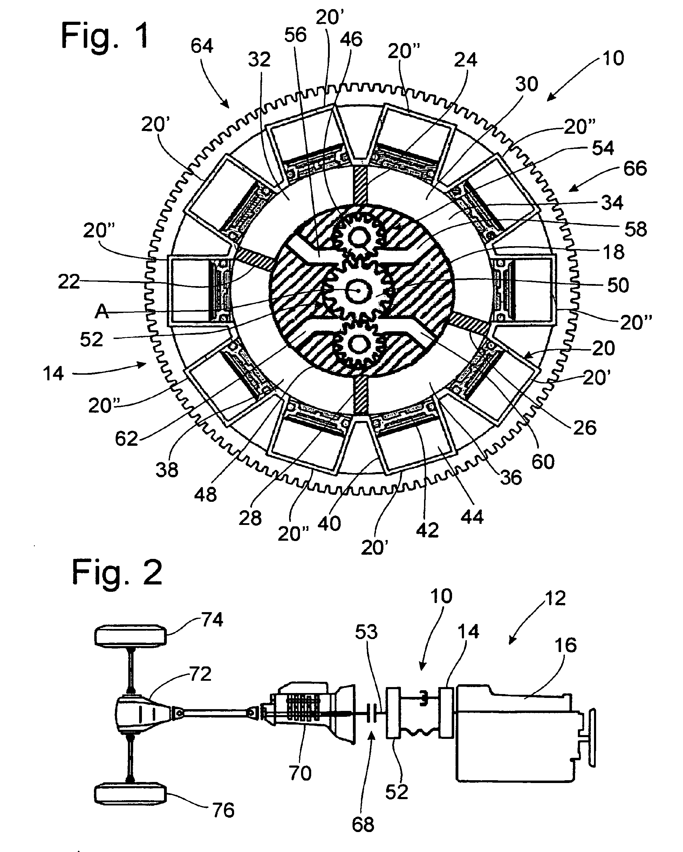

Die Fig. 1 zeigt in Querschnittsansicht, also geschnitten senkrecht zu einer zur Zeichenebene der Fig. 1 orthogonalen Drehachse, einen Torsionsschwingungsdämpfer 10, wie er auch in dem in Fig. 2 dargestellten Antriebssystem 12 eingesetzt werden kann. Der Torsionsschwingungsdämpfer 10 umfasst eine Primärseite 14, welche mit der Antriebswelle eines Antriebsaggregats 16, beispielsweise einer Brennkraftmaschine, drehfest verbunden werden kann. Diese Primärseite 14 umfasst einen zylinderartig gestalteten Zentralkörper 18, der von einer Mehrzahl in ringartiger bzw. sternartiger Konfiguration angeordneter Fluiddruckspeichereinheiten 20 umgeben ist. Diese Fluiddruckspeichereinheiten 20 sind am Zentralkörper 18 durch vier Trennwandungen 22, 24, 26, 28 getragen, welche gleichzeitig auch einen zwischen dem Zentralkörper und den Fluiddruckspeichereinheiten 20 gebildeten ringartigen Zwischenraum 30 in vier Verbindungskammern 32, 34, 36 und 38 unterteilen. Es sei darauf hingewiesen, dass in axialer Richtung selbstverständlich hier nicht erkennbare Abdeckplatten diese Verbindungskammern 32, 34, 36, 38 abschließen können.

Jede der Fluiddruckspeichereinheiten 20 umfasst einen Zylinder 40, wobei die Zylinder 40 aller Fluiddruckspeichereinheiten 20 an einem gemeinsamen Körper in der in Fig. 1 erkennbaren ringartigen bzw. sternartigen Konfiguration und nach radial innen offen ausgebildet sind. In jedem Zylinder 40 ist ein Trennkolben 42 als Trennelement radial verschiebbar aufgenommen. Er trennt eine jeweilige Verbindungskammer 32, 34, 36, 38 von einem im Zylinder 40 gebildeten Volumen 44, in welchem, wie im Folgenden noch dargelegt, ein kompressibles Fluid, beispielsweise Luft oder ein anderes Gas, enthalten ist. Die Verbindungskammern 32, 34, 36, 38 dahingegen sind mit inkompressiblem Fluid gefüllt, beispielsweise Öl oder dergleichen.

In dem Zentralkörper 18 der Primärseite 14 sind radial versetzt zur Drehachse A zwei Zahnräder 46, 48 jeweils um zur Drehachse A parallele Drehachsen drehbar getragen. Zwischen diesen beiden Zahnrädern 46, 48 liegt ein zentrales Zahnrad 50, welches gleichzeitig auch zumindest einen Teil einer Sekundärseite 52 des Torsionsschwingungsdämpfers 10 bildet. Das Zahnrad 50 ist also im Zentralkörper 18 drehbar enthalten und ist beispielsweise mit einer im Antriebssystem 12 dann folgenden Welle 53 oder einem sonstigen Drehmomentübertragungsbauteil fest gekoppelt. Eine Relativdrehung zwischen der Primärseite 14 und der Sekundärseite 52, also eine Relativdrehung des Zentralkörpers 18 mit den daran getragenen Fluiddruckspeichereinheiten 20 bezüglich der Sekundärseite 52, also bezüglich des zentralen Zahnrads 50, führt gleichzeitig auch zu einer Rotation der beiden Zahnräder 46, 48 im Zentralkörper 18, da diese mit dem zentralen Zahnrad 50 in Kämmeingriff stehen. Die Zahnräder 46, 48 bilden zusammen mit dem zentralen Zahnrad 50 eine als Fluidförderanordnung wirksame Zahnradpumpe 54, welche dann aktiv ist, wenn die Primärseite 14 und die Sekundärseite 52 sich bezüglich einander verdrehen.

In Zuordnung zu den vier dargestellten Verbindungskammern 32, 34, 36, 38 sind jeweilige Verbindungskanäle 56, 58, 60, 62 vorgesehen. Diese stellen jeweils eine Verbindung her zwischen den Verbindungskammern und den miteinander kämmenden Verzahnungsbereichen der Zahnräder 46, 48, 50. Auch diese Verbindungskanäle 56, 58, 60, 62 sind mit dem in den Verbindungskammern 32, 34, 36, 38 enthaltenen im Wesentlichen inkompressiblen Fluid gefüllt. Man erkennt dabei, dass durch die Verbindungskanäle 56, 58 die beiden Verbindungskammern 32, 34 einander paarweise zugeordnet sind und inkompressibles erstes Fluid bei Wirksamkeit des durch das Zahnrad 46 und das Zahnrad 50 gebildeten Bereichs der Zahnradpumpe 54 dieses erste Fluid zwischen den beiden Verbindungskammern 32, 34 gefördert wird. Entsprechend sind durch die Verbindungskanäle 60, 62 die Verbindungskammern 36, 38 einander paarweise zugeordnet, und bei Wirksamkeit des das Zahnrad 48 und das Zahnrad 50 umfassenden Bereichs der Zahnradpumpe 54 wird erstes, also inkompressibles Fluid zwischen diesen beiden Verbindungskammern 36, 38 gefördert.

In Fig. 1 erkennt man weiter, dass bei Relativdrehung zwischen der Primärseite 14 und der Sekundärseite 52 in einer ersten Relativdrehrichtung die den diametral gegenüberliegenden Verbindungskammern 32, 36 zugeordneten Fluiddruckspeichereinheiten 20' belastet werden, also durch entsprechende Förderwirkung der Zahnradpumpe 54 der Fluiddruck des ersten Fluids in den Verbindungskammenr 32, 36 erhöht wird und damit die Trennkolben 42 dieser Fluiddruckspeichereinheiten 20' verstärkt belastet werden und somit auch das kompressible, zweite Fluid in den jeweiligen Zylindern 40 derselben durch Verschiebung der Trennkolben 42 nach radial außen verstärkt komprimiert wird. In entsprechender Weise werden die mit den diametral einander gegenüberliegenden Verbindungskammern 34, 38 zusammenwirkenden Fluiddruckspeichereinheiten 20" verstärkt belastet, wenn der Druck des ersten Fluids durch entsprechende Förderwirkung der Zahnradpumpe 54 in den Verbindungskammern 34, 38 erhöht wird. Bei Erhöhung des Fluiddrucks in den einander paarweise zugeordneten Verbindungskammern 32, 36 bzw. 34, 38 nimmt den Fluiddruck in den jeweils anderen beiden Kammern ab, was zu einer entsprechenden Entlastung des in den zugehörigen Fluiddruckspeichereinheiten enthaltenen kompressiblen zweiten Fluids und einer entsprechenden Verlagerung der Trennkolben 42 nach radial innen führt. Es sei hier darauf hingewiesen, dass die Trennkolben 42 in der Fig. 1 in bzw. nahe einer radial inneren Grenzpositionierung gezeigt sind. Um in beiden Relativdrehrichtungen diese Trennkolben 42 gleichermaßen nach radial innen bzw. radial außen verlagern zu können, könnten diese beispielsweise etwas weiter radial außen in den jeweiligen Zylindern 40 positioniert sein, wenn die Primärseite 14 und die Sekundärseite 52 bezüglich einander in einer Neutral-Relativdrehlage sind.

Man erkennt in Fig. 1 also, dass die Druckfluidspeichereinheiten 20' zusammen mit den Verbindungskammern 32, 34 und den Verbindungskanälen 56, 58 eine erste Fluiddruckspeicheranordnung 64 bereitstellen, deren Speicherdruck in einer ersten Relativdrehrichtung zwischen Primärseite 14 und Sekundärseite 52 zunimmt, während die Fluiddruckspeichereinheiten 20" zusammen mit den Verbindungskammern 34, 38 und den Verbindungskanälen 58, 62 eine zweite Fluiddruckspeicheranordnung 66 bereitstellen, deren Speicherdruck bei Drehung in der entgegengesetzten Relativdrehrichtung erhöht wird. Durch diese Funktionalität wird es möglich, im Antriebssystem 12 auftretende Drehungleichförmigkeiten durch die Förderwirkung der im Wesentlichen ohne Relativdrehwinkelbegrenzung zwischen Primärseite 14 und Sekundärseite 52 wirksamen Zahnradpumpe 54 zu bedämpfen, um ein im Wesentlichen gleichmäßiges Drehmoment zwischen einem Antriebsaggregat 16 und den im Momentenfluss folgenden Systemkomponenten des Antriebsstrangs 16, also beispielsweise einem Anfahrelement 68, einem Getriebe 70, einem Differential 72 und den Antriebsrädern 74, 76 zu übertragen.

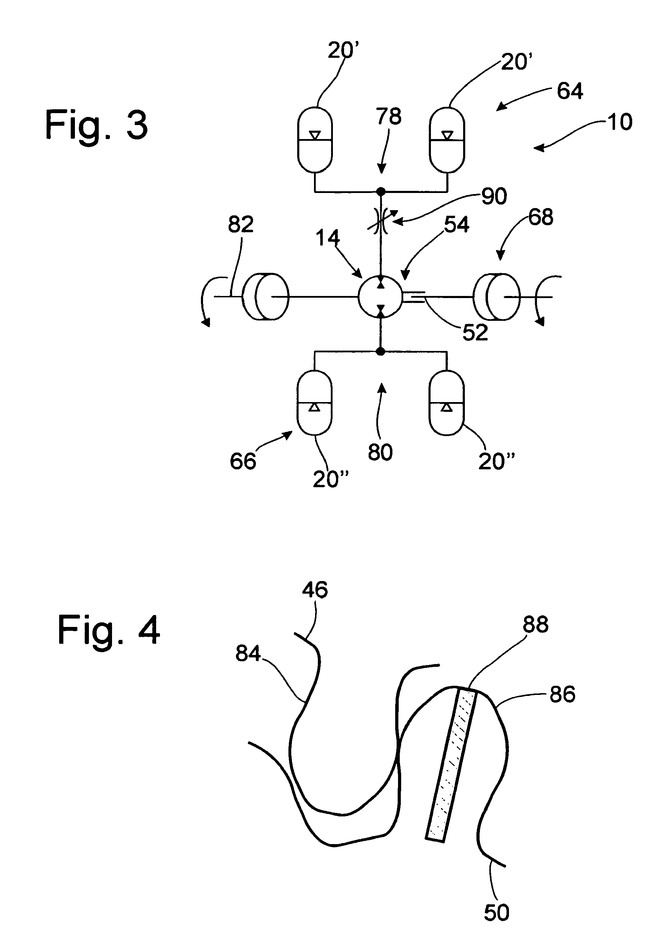

Eine prinzipartige Darstellung eines derartigen Torsionsschwingungsdämpfers 10 ist in der Fig. 3 gezeigt. Man erkennt hier wieder die als Fluidförderanordnung wirksame Zahnradpumpe 54. Man erkennt weiter zwischen der Zahnradpumpe 54 und den Fluiddruckspeichereinheiten 20' der Fluiddruckspeicheranordnung 64 einen allgemein mit 78 bezeichneten Fluidströmungsweg, welcher im Wesentlichen also die Verbindungskanäle 56, 60 und die Verbindungskammern 32, 36 umfasst. Entsprechend erkennt man in Zuordnung zur Fluiddruckspeicheranordnung 66 einen Fluidströmungsweg 80, der also im Wesentlichen die Verbindungskanäle 58, 62 und die beiden Verbindungskammern 34, 38 umfasst. Je nach Relativdrehrichtung zwischen der Primärseite 14, welche beispielsweise mit einer Antriebswelle 82 des Antriebsaggregats 16 gekoppelt ist, und der Sekundärseite 52, welche ein Drehmoment über das Anfahrelement 68, also beispielsweise eine trockenlaufende Kupplung, eine nasslaufende Kupplung oder einen hydrodynamischen Drehmomentwandler weitergibt, wird erstes, also im Wesentlichen inkompressibles Fluid entweder vom Strömungsweg 78 in den Strömungsweg 80 oder in umgekehrter Richtung gefördert, so dass der Speicherdruck entweder in den Fluiddruckspeichereinheiten 20' zunimmt oder in den Fluiddruckspeichereinheiten 20" zunimmt und dann selbstverständlich in den jeweils anderen Fluiddruckspeichereinheiten entsprechend abnimmt. Durch den bei bestehender Druckdifferenz zwischen den beiden Fluiddruckspeicheranordnungen 64, 66 auf die Verzahnungsbereiche der Zahnräder 46, 48 bzw. 50 einwirkenden Differenzdruck wird letztendlich dann eine die Primärseite 14 und die Sekundärseite 52 in Richtung zu ihrer Neutral-Relativdrehlage vorspannende Kraft bzw. ein entsprechendes Drehmoment erzeugt.

Um im Bereich dieser miteinander in Kämmeingriff stehenden Verzahnungen Fluidleckagen so weit als möglich zu vermeiden, können, wie dies in Fig. 4 anhand der Zahnräder 46 und 50 beispielhaft dargestellt ist, in den Zähnen 84, 86 derselben Dichtungselemente 88 vorgesehen sein. Diese sind in nach radial außen und ggf. auch axial offenen Schlitzen der miteinander in Kämmeingriff stehenden Zähne 84 bzw. 86 aufgenommen. Durch Fliehkrafteinwirkung werden sie nach radial außen belastet. Durch entsprechende elastische Ausgestaltung können sie auch in axialer Richtung überstehen und somit einen dichten Abschluss bezüglich des Zentralkörpers 18 realisieren. Durch das Vorsehen derartiger Dichtungselemente 88 werden Fluidleckagen im Angrenzungsbereich der Zahnräder 46, 48, 50 an den Zentralkörper 18 vermieden und auch Fluidleckagen im Angrenzungsbereich der Zahnräder aneinander. Es sei darauf hingewiesen, dass diese Dichtungselemente 88 verschiedenste Konfigurationen haben können, beispielsweise plattenartig oder rahmenartig aufgebaut sein können. Weiter sei darauf hingewiesen, dass das zentrale Zahnrad 50, das beispielsweise auf der Abtriebswelle 53 getragen ist, bezüglich des Zentralkörpers 18 fluiddicht geführt bzw. auch gelagert ist. Diese Lagerung kann axial beidseits des zentralen Zahnrads 50 erfolgen. Ein fluiddichter Abschluss ist insbesondere dort erforderlich, wo diese Abtriebswelle 53 aus dem Zentralkörper 18 hervorsteht. Dies ist besonders dann erforderlich, wenn ein derartiger Torsionsschwingungsdämpfer 10 in einer Kupplungsglocke in der Umgebungsluft angeordnet ist und mithin Fluidleckagen nach außen zu vermeiden sind. Ist der Torsionsschwingungsdämpfer 10 beispielsweise zusammen mit einer nasslaufenden Lamellenkupplung als Anfahrelement in einem gemeinsamen nach außen hin einen fluiddichten Abschluss bereitstellenden Gehäuse angeordnet, so ist zwar zum Vermeiden von Druckverlusten ein fluiddichter Abschluss der Abtriebswelle 53 bezüglich des Zentralkörpers 18 vorteilhaft, gewisse Leckagen in das Innenvolumen des Gehäuses sind jedoch grundsätzlich nicht problematisch, da das herausleckende Fluid, das im Wesentlichen die gleiche Konsistenz haben wird, wie das auch für die nasslaufende Lamellenkupplung oder ggf. auch einen hydrodynamischen Drehmomentwandler eingesetzte Fluid, in einen Fluidsumpf zurückgeführt werden kann.

Man erkennt in Fig. 3 weiterhin, dass beispielsweise im Fluidströmungsweg 78 der Fluiddruckspeicheranordnung 64 eine Drosselanordnung 90 vorgesehen ist. Diese kann eine Einschnürung im Fluidströmungsweg bilden und somit das Fördern von Fluid von bzw. zu den Fluiddruckspeichereinheiten 20' erschweren. Entsprechend könnte selbstverständlich eine derartige Drosselanordnung auch oder alternativ im Fluidströmungsweg 80 der Fluiddruckspeicheranordnung 66 vorgesehen sein. Eine derartige Drosselanordnung kann beispielsweise auch druckabhängig oder abhängig vom Ausmaß der Relativdrehung zwischen der Primärseite 14 und der Sekundärseite 52 arbeiten und somit beispielsweise bei vergleichsweise großer Auslenkung oder entsprechend auch vergleichsweise schneller Auslenkung den Strömungswiderstand erhöhen. Auch eine drehzahlabhängige Wirksamkeit ist möglich.

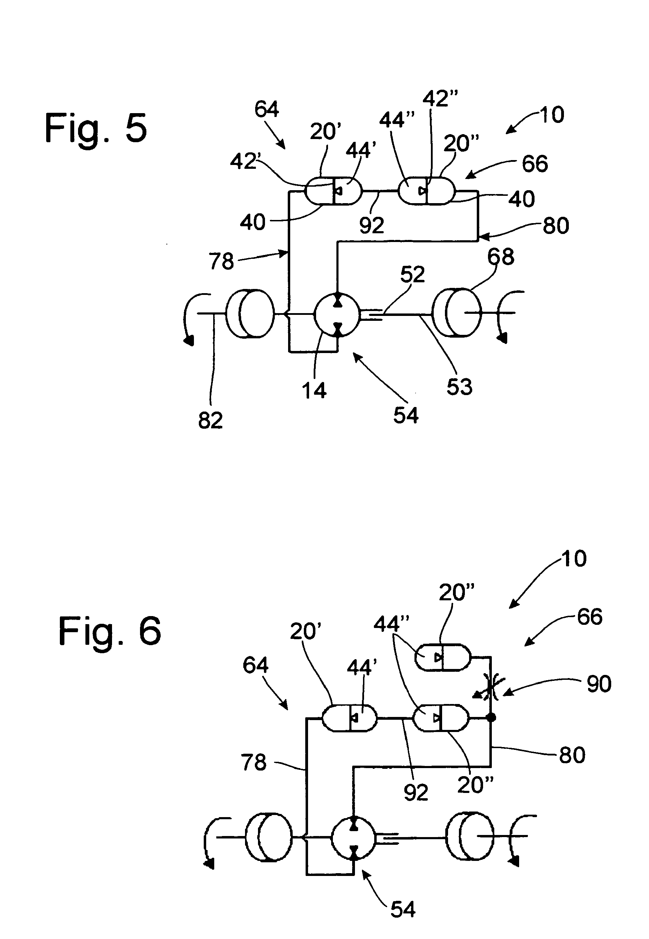

Die Fig. 5 zeigt in prinzipartiger Darstellung wieder den Torsionsschwingungsdämpfer 10 mit der Zahnradpumpe 54 als Fluidförderanordnung. Man erkennt, dass bei dieser Ausgestaltungsform beispielsweise jede der Fluiddruckspeicheranordnungen 64, 66 eine Fluiddruckspeichereinheit 20' bzw. 20" aufweist. Deren mit kompressiblem, zweitem Fluid gefüllte Volumina 44' bzw. 44" sind über einen Verbindungskanal 92 in Fluidaustauschverbindung. Fördert, bedingt durch eine Relativdrehung der Primärseite 14 bezüglich der Sekundärseite 52, die Zahnradpumpe 54 erstes, inkompressibles Fluid in den Fluidströmungsweg 78 der Fluiddruckspeicheranordnung 64 und entnimmt in entsprechendem Ausmaß die Zahnradpumpe 54 erstes Fluid aus dem Fluidströmungsweg 80 der Fluiddruckspeicheranordnung 66, so wird zwar das im Volumen 44' der Fluiddruckspeichereinheit 20' enthaltene erste Fluid belastet. Da es über den Verbindungskanal 92 jedoch in das Volumen 44" der Fluiddruckspeichereinheit 20" entweichen kann, wird der Druck des kompressiblen, zweiten Fluids nicht erhöht. Dieses wird lediglich selbstverständlich unter Erzeugung gewisser Strömungsverluste zwischen den beiden Volumina 44' und 44" hin und her geschoben. Erst dann, wenn das Trennelement 42" der Fluiddruckspeichereinheit 20 in maximalem Ausmaß in Richtung Vergrößerung des Volumens 44" verschoben worden ist und an einer weiteren Verschiebung gehindert wird, hat eine weiter andauernde Förderwirkung der Zahnradpumpe 54 in den Fluidströmungsweg 78 zur Folge, dass der Druck des zweiten Fluids im Volumen 44' und selbstverständlich entsprechend auch im Volumen 44" ansteigt und eine Druckspeicherwirkung erzeugt wird, die ein Rückstellmoment zwischen Primärseite 14 und Sekundärseite 52 generiert.

In dem Ausmaß, in welchem jedoch das kompressible zweite Fluid zwischen den Volumina 44' und 44" hin und her bewegt werden kann, ist zwischen Primärseite 14 und Sekundärseite 52 ein Freiwinkel generiert, in welchem einer Relativdrehung lediglich die durch Strömungsverluste generierten Dämpfungseffekte entgegengesetzt werden. Diese können gezielt beispielsweise durch das Eingliedern von Drosselanordnungen in einen oder beide Fluidströmungswege 78, 80 erhöht bzw. beeinflusst werden.

Die Fig. 6 zeigt eine Ausgestaltungsvariante, bei welcher die Fluiddruckspeicheranordnung 66 zwei Fluiddruckspeichereinheiten 20" aufweist. Nur bei einer ist das Volumen 44" mit dem Volumen 44' einer Fluiddruckspeichereinheit 20' der Fluiddruckspeicheranordnung 64 verbunden. Die weitere Fluiddruckspeichereinheit 20" wirkt zu dieser Fluiddruckspeichereinheit 20" parallel, ggf. über eine Drosselanordnung 90. Fördert die Zahnradpumpe 54 erstes Fluid in den Fluidströmungsweg 78, so wird im Wesentlichen nur die Fluiddruckspeichereinheit 20' der Fluiddruckspeicheranordnung 64 wirksam werden, wenn das kompressible zweite Fluid im maximalen Ausmaß verschoben worden ist. Bei ungekehrter Förderrichtung wird zunächst primär das kompressible zweite Fluid aus dem Volumen 44" in das Volumen 44' verschoben. Ein spürbarer Druckaufbau in der zusätzlich noch parallel geschalteten Fluiddruckspeichereinheit 20" wird nicht auftreten. Erst dann, wenn das zweite Fluid in maximalem Ausmaß aus dem Volumen 44" verdrängt worden ist, führt weiteres Fördern von erstem Fluid in den Fluidströmungsweg 80 dazu, dass der Druck in den beiden miteinander verbundenen Volumina 44' und 44" zunimmt. Entsprechend nimmt dann parallel dazu auch der Druck in der parallel geschalteten Fluiddruckspeichereinheit 20" bzw. dem Volumen 44" derselben zu.

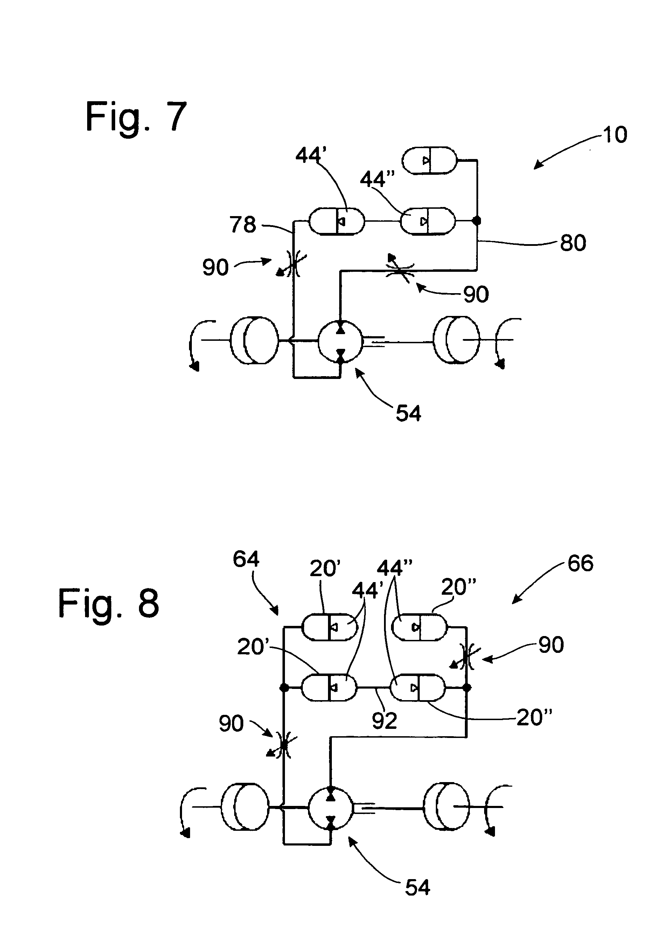

Die Fig. 7 zeigt eine Ausgestaltung des Torsionsschwingungsdämpfers 10, welche der in Fig. 6 sehr ähnlich ist. Man erkennt jedoch, dass in den beiden Fluidströmungswegen 78, 80 jeweils Drosselanordnungen 90 angeordnet sind, so dass insbesondere auch in demjenigen Drehwinkelbereich, in welchem die Verschiebung des zweiten Fluids zwischen den beiden Volumina 44', 44" auftritt, eine verstärkte Dämpfungswirkung erzielbar ist.

Die Fig. 8 zeigt eine Ausgestaltung, bei welcher in beiden Fluiddruckspeicheranordnungen 64, 66 zwei Fluiddruckspeichereinheiten 20' bzw. 20" parallel wirken. Nur bei einem Paar davon sind jedoch die Volumina 44', 44" über den Verbindungskanal miteinander verbunden. Die anderen beiden Fluiddruckspeichereinheiten 20', 20" wirken ohne derartige Verbindung dann jeweils parallel.

Man erkennt in Fig. 8 weiter in verschiedenen Bereichen Drosselanordnungen 90, die dazu beitragen, eine verstärkte Dämpfungswirkung zu erzielen. Je nachdem, wo diese Drosselanordnungen positioniert sind, können sie selbstverständlich die Dämpfungscharakteristik dadurch beeinflussen, dass die jeweilige Versorgung bzw. Entsorgung einer Fluiddruckspeichereinheit mit erstem, inkompressiblem Fluid erschwert wird.

Mit Bezug auf die Fig. 5 bis 8 sei darauf hingewiesen, dass selbstverständlich bei den beiden Fluiddruckspeicheranordnungen 64, 66 die Zahl der jeweiligen Fluiddruckspeichereinheiten 20', 20" entsprechend den erforderlichen Dämpfungscharakteristiken verschieden zu den dargestellten Anzahlen sein kann. So können, wie beispielsweise in Fig. 1 erkennbar, in Zuordnung zur Fluiddruckspeicheranordnung 64 vier Fluiddruckspeichereinheiten 20' vorgesehen sein und in Zuordnung zur Fluiddruckspeicheranordnung 66 sechst Fluiddruckspeichereinheiten 20" vorgesehen sein, wobei hier dann eine beliebige Verbindung durch jeweilige Verbindungskanäle 92 zwischen einzelnen Fluiddruckspeichereinheiten der verschiedenen Fluiddruckspeicheranordnungen 64, 66 realisierbar sind.

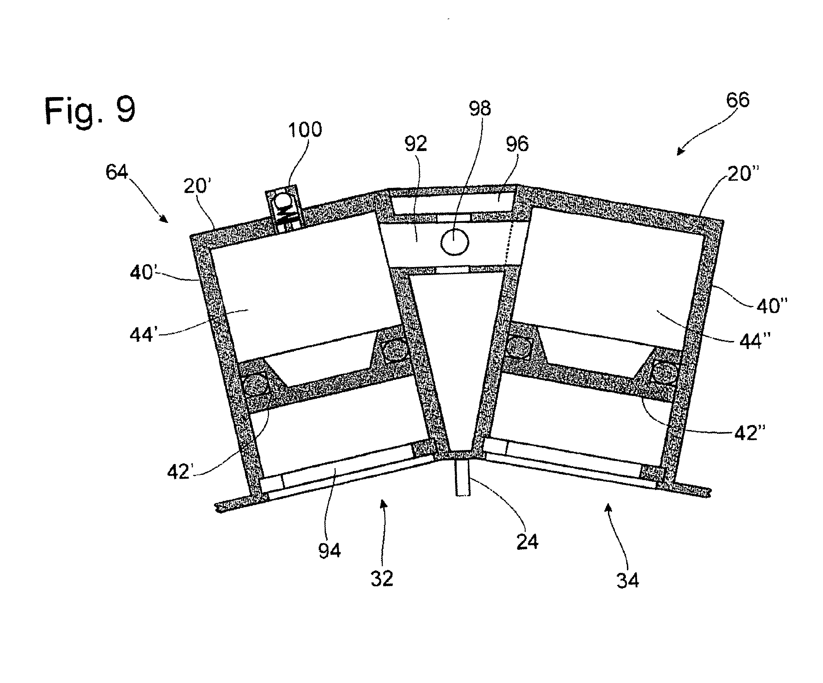

Die Fig. 9 zeigt in vergrößerter Ansicht zwei in Umfangsrichtung aufeinander folgende Fluiddruckspeichereinheiten 20', 20", deren zweites Fluid enthaltende Volumina 44', 44" durch einen näherungsweise in Umfangsrichtung sich erstreckenden Verbindungskanal 92 mit einander verbunden sind. Die beiden Trennkolben 42', 42" sind hier in einer radial näherungsweise mittigen Positionierung, so dass, je nachdem, ob der Fluiddruck erhöht oder gemindert wird, sie nach radial außen oder nach radial innen bewegt werden können. Ein jeweiliger Sicherungsring 94 verhindert eine Bewegung der Trennkolben 42' bzw. 42" aus den zugehörigen Zylindern 40', 40" heraus, beispielsweise bei Druckverlust des ersten Fluids.

Der Verbindungskanal 92 überbrückt den Umfangszwischenraum 96 zwischen den beiden Zylindern 40', 40". Dieser Zwischenraum 96 kann nach radial außen und in Achsrichtung abgeschlossen sein. Der Verbindungskanal 92 weist eine oder mehrere Öffnungen 98 auf, durch welche dieser zu dem Zwischenraum 96 offen ist. Auf diese Art und Weise wird es möglich, das Gesamtvolumen des zweiten, kompressiblen Fluids der beiden hier betrachteten Fluiddruckspeichereinheiten 20' und 20" zu vergrößern, was ein entsprechend größeres komprimierbares Gasvolumen und eine entsprechend weiche Dämpfungscharakteristik zur Folge hat. Der Vorspanndruck des zweiten Fluids kann beispielsweise über ein Befüllventil 100 eingestellt werden, das selbstverständlich auch dann in Zuordnung zu jeder Fluiddruckspeichereinheit vorgesehen sein kann, wenn diese nicht mit anderen Fluiddruckspeichereinheiten in Verbindung stehen. Auf diese Art und Weise wird es möglich, durch Einstellung des Vorspanndrucks ebenfalls einen Einfluss auf die Dämpfungscharakteristik zu nehmen.

Durch die Anzahl der bei den jeweiligen Fluiddruckspeicheranordnungen 64, 66 wirksamen Fluiddruckspeichereinheiten 20', 20" und auch durch deren Vorspanndruck wird es möglich, insbesondere auch in Schubrichtung und in Zugrichtung unterschiedliche Dämpfungscharakteristiken zu realisieren. Auch können beispielsweise mehrstufige Kennlinien generiert werden, indem für die Trennkolben der Fluiddruckspeichereinheiten verschiedene Kolbenwege zugelassen werden. Es sei hier darauf hingewiesen, dass anstelle der dargestellten und beschriebenen Trennkolben auch andere Trennelemente, beispielsweise Trennmembranen, eingesetzt werden können, die dann entsprechend verformbar sind. Auch die Kombination von Membran und Kolben ist möglich. Der Einsatz einer Membran hat den Vorteil, dass die bei Verschiebung eines Kolbens auftretenden Reibeffekte vermieden werden können und dass deren eigene Elastizität einen Beitrag zur Rückstellkraft liefern kann.

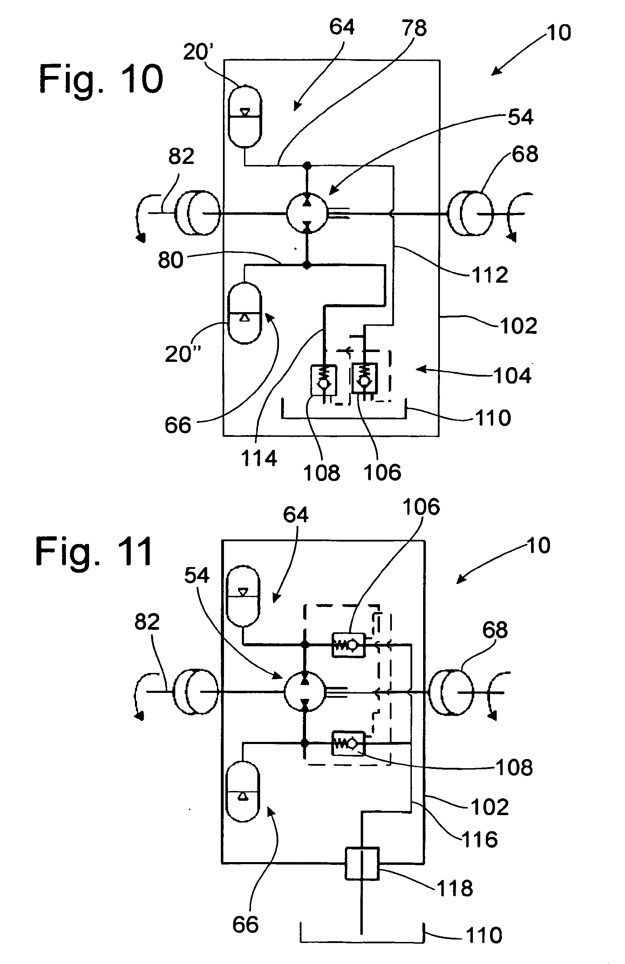

Die Fig. 10 zeigt einen Torsionsschwingungsdämpfer 10, welcher wieder die beiden Fluiddruckspeicheranordnungen 64, 66 aufweist. Es sei hier darauf hingewiesen, dass diese so wie in den vorangehend beschriebenen Ausgestaltungsbeispielen aufgebaut sein können, also eine Fluidaustauschverbindung zwischen den Fluiddruckspeichereinheiten 20', 20" bestehen kann bzw. auch mehrere derartige Fluiddruckspeichereinheiten 20' bzw. 20" vorgesehen sein können. Der Torsionsschwingungsdämpfer 10 ist im Wesentlichen fluiddicht in einem Gehäuse 102 aufgenommen. Das Anfahrelement 68, also beispielsweise eine trockenlaufende Reibungskupplung, ist nicht in diesem Gehäuse 102 angeordnet.

Es ist eine Ventilanordnung 104 vorgesehen, welche im dargestellten Beispiel zwei druckabhängig schaltende Rückschlagventile 106, 108 aufweist. Das druckabhängige Rückschlagventil 106 kann eine Verbindung herstellen zwischen dem Fluidströmungsweg 78 der Fluiddruckspeicheranordnung 64 und einem im Gehäuse 102 gebildeten Reservoir 110. Entsprechend kann das Rückschlagventil 108 eine Verbindung herstellen zwischen dem Fluidströmungsweg 80 der Fluiddruckspeicheranordnung 66 und dem Reservoir 110, welches durch den im Wesentlichen drucklosen Fluidsumpf in dem Gehäuse 102 gebildet sein kann.

Die Auslegung der beiden druckabhängig schaltenden Rückschlagventile 106, 108 ist dabei derart, dass als Ansteuerdruck jeweils der Druck in einer Verbindungsleitung 112 bzw. 114 zum jeweils nicht zugeordneten Fluidströmungsweg 78, 80 erfasst bzw. verwendet wird. Dieser Druck wird im Wesentlichen auch korrespondieren mit dem Druck des ersten Fluids im jeweiligen Fluidströmungsweg 78 bzw. 80. Weiter ist die Auslegung derart, dass dann, wenn der Ansteuerdruck für ein jeweiliges Rückschlagventil 106, 108 den Druck im zugeordneten Fluidströmungsweg 78 bzw. 80 übersteigt, das Ventil öffnet, also eine Verbindung herstellt, bzw. dann, wenn der Ansteuerdruck kleiner ist, als der Druck im zugeordneten Fluidströmungsweg 78 bzw. 80, das Ventil schließt. Dies bedeutet, dass beispielsweise dann, wenn die Zahnradpumpe 54 Fluid vom Fluidströmungsweg 80 in den Fluidströmungsweg 78 fördert, also der Fluiddruck im Fluidströmungsweg 78 gegenüber dem Fluiddruck im Fluidströmungsweg 80 erhöht wird, dass Rückschlagventil 106, welches im Wesentlichen als Ansteuerdruck den im Fluidströmungsweg 80 vorhandenen Fluiddruck erfährt, schließt, während gleichermaßen das Rückschlagventil 108 öffnet. Die Folge davon ist, dass von der Zahnradpumpe 54 gefördertes Fluid im Fluidströmungsweg 78 tatsächlich zur Druckerhöhung des bzw. der Fluiddruckspeichereinheiten 20' beiträgt. Ein Abströmen über das Rückschlagventil 106 zum Reservoir 110 ist nicht möglich. Gleichzeitig wird jedoch die bzw. jede Fluiddruckspeichereinheit 20" der Fluiddruckspeicheranordnung 66 über das offene Rückschlagventil 108 mit dem Reservoir 110 verbunden, so dass sich diese Fluiddruckspeichereinheiten 20" im maximalen Ausmaß entspannen können. Bei Umkehr der Relativdrehrichtung und mithin auch Umkehr der Förderrichtung der Zahnradpumpe 54 wird dann, wenn der Fluiddruck im Fluidströmungsweg 78 unter dem Druck im Fluidströmungsweg 80 sinkt, ein Umschalten der beiden Rückschlagventile 106, 108 erzeugt, so dass nunmehr Druck in der bzw. den Fluiddruckspeichereinheiten 20" gespeichert wird, während die bzw. jede Fluiddruckspeichereinheit 20' sich durch Verbindung mit dem Reservoir 110 maximal entspannen kann.

Ein wesentlicher Vorteil dieser Ausgestaltung ist, dass mit vergleichsweise geringer Vorspannung der Fluiddruckspeichereinheiten 20', 20" gearbeitet werden kann und der Torsionsschwingungsdämpfer 10 somit wesentlich weicher ausgelegt werden kann.

Eine Abwandlung dieser Ausgestaltungsform ist in Fig. 11 gezeigt. Man erkennt wieder das Gehäuse 102, welches den Torsionsschwingungsdämpfer 10 bzw. den wesentlichen Systembereich desselben enthält. Das Reservoir 110 ist außerhalb des Gehäuses 102 in einem nicht rotierenden Systembereich vorhanden. Die beiden Rückschlagventile 106, 108 sind über eine gemeinsame Verbindungsleitung 116 und eine Drehdurchführung 118 in Verbindung mit dem Reservoir 110. Ansonsten entspricht die Funktionalität der vorangehend Beschriebenen.

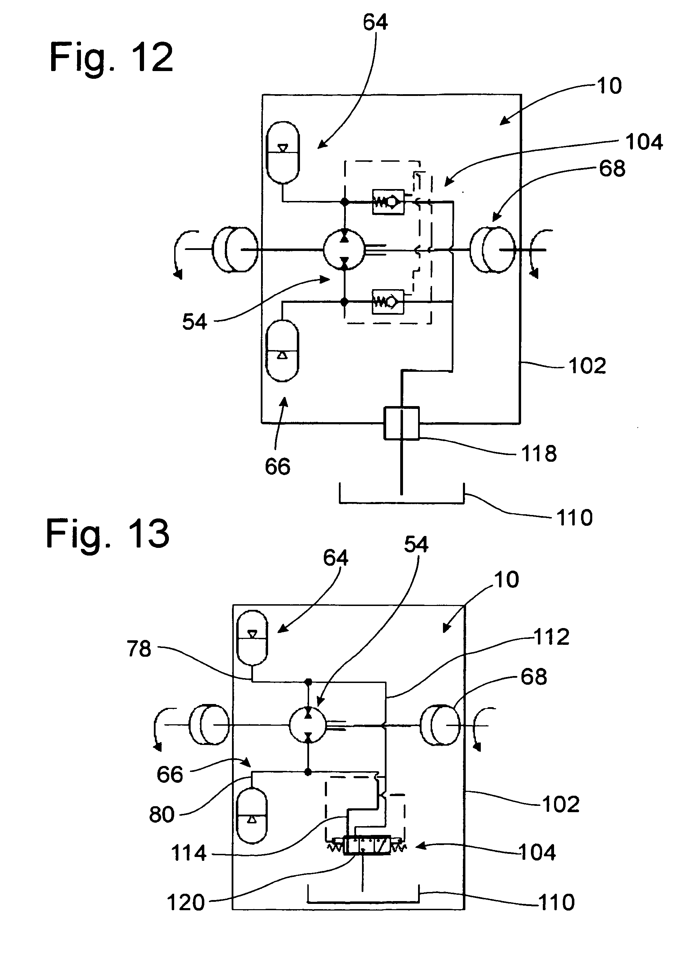

Bei der in Fig. 12 gezeigten Ausgestaltungsvariante ist auch das Anfahrelement 68 in das Gehäuse 102 integriert. Dies bietet sich dann an, wenn dieses Anfahrelement 68 als nasslaufende Anfahrkupplung, beispielsweise als nasslaufende Lamellenkupplung, ausgebildet ist, so dass das zu deren Ansteuerung erforderliche Fluid gleichzeitig auch das erste Fluid des Torsionsschwingungsdämpfers 10 bilden kann. Gegebenenfalls auftretende Fluidleckagen des Torsionsschwingungsdämpfers 10 können dann zusammen mit Fluidleckagen im Anfahrelement 68 bzw. generell mit dessen Fluid zusammengeführt werden. Gleichzeitig kann die insbesondere zur Ansteuerung eines derartigen Anfahrelements 68 erforderliche Drehdurchführung 118 auch zur Versorgung des Torsionsschwingungsdämpfers 10 mit dem inkompressiblen ersten Fluid genutzt werden.

Bei der in Fig. 13 gezeigten Ausgestaltungsform umfasst die Ventilanordnung 104 nicht zwei separat arbeitende und ggf. auch separat an der Primärseite oder der Sekundärseite angeordnete Ventile, sondern umfasst ein Wegeventil 120, das jedoch wiederum abhängig vom Druck in den jeweiligen Verbindungsleitungen 112, 114 schalten kann.

Man erkennt in Fig. 13, dass dieses Wegeventil 120 grundsätzlich in drei Stellungen schaltbar ist. In einer Neutralstellung sind die beiden Verbindungsleitungen 112, 114 abgeschlossen, so dass der Torsionsschwingungsdämpfer 10 so arbeitet, als wäre keiner der Fluidströmungswege 78, 80 in Verbindung mit dem Fluidreservoir 110. Es wird das erste Fluid dann durch die Zahnradpumpe 54 zwischen den beiden Fluidströmungswegen 78, 80 der Fluiddruckspeicheranordnungen 64, 66 abhängig von der Relativdrehrichtung zwischen Primärseite und Sekundärseite hin und her gefördert. Stellen sich die Druckverhältnisse so ein, wie vorangehend dargelegt, wird das Wegeventil 120 dann druckabhängig umgeschaltet, so dass jeweils derjenige Fluidströmungsweg 78 bzw. 80, welcher den größeren Fluiddruck des ersten Fluids aufweist, vom Reservoir 110 abgekoppelt wird, während der andere Fluidströmungsweg mit dem Reservoir 110 verbunden wird. Es ergibt sich wieder die vorangehend mit Bezug auf die Fig. 10 bereits erläuterte Charakteristik.

Grundsätzlich könnte das Wegeventil 120 auch so gestaltet sein, dass es in seiner neutralen Positionierung die beiden Verbindungsleitungen 112, 114 nicht abschließt, sondern miteinander verbindet. Es wird damit ein Strömungsweg generiert, über welchen Fluid durch den Betrieb der Zahnradpumpe 54 zwischen den beiden Fluidströmungswegen 78, 80 umgewälzt wird. Zusätzlich zu der Druckspeichercharakteristik, welche letztendlich auch die Rückstellkraft erzeugt, wird damit ein rein dämpfender Anteil wirksam, nämlich dämpfend durch die bei der Fluidumwälzung entstehenden Strömungsverluste. Diese können dadurch definiert eingestellt werden, dass in einer oder beiden Verbindungsleitungen 112, 114 eine die Fluidströmung erschwerende Drosselanordnung vorgesehen wird.

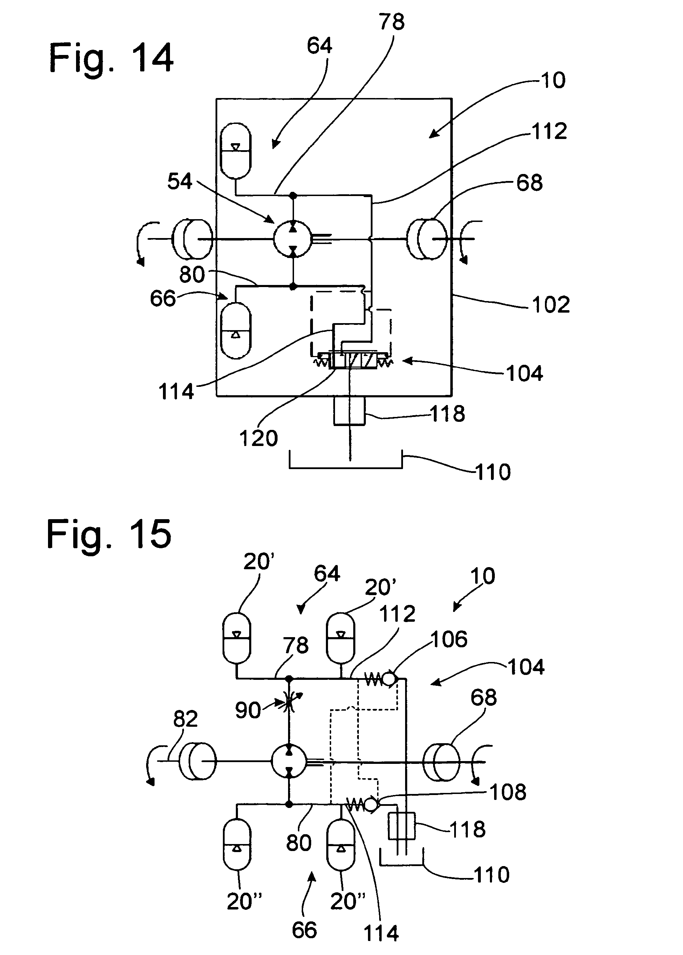

Die in Fig. 14 gezeigte Ausgestaltungsvariante unterscheidet sich von der in Fig. 13 Gezeigten dadurch, dass das Reservoir 110 wieder im nicht rotierenden Systembereich, also außerhalb des Gehäuses 102 angeordnet ist und mit der Ventilanordnung 104, also dem Wegeventil 120 über die Drehdurchführung 118 in Verbindung steht. Die Funktionalität kann dabei so sein, wie vorangehend beschrieben. Insbesondere erkennt man, dass in der neutralen Stellung die beiden Verbindungsleitungen 112, 114 miteinander verbunden sind, um den vorangehend beschriebenen Fluidumwälzungsaspekt zu generieren.

In Fig. 15 ist eine Ausgestaltungsvariante gezeigt, bei welcher die Ventilanordnung 104 wieder die beiden druckabhängig schaltbaren Rückschlagventile 106, 108 in Zuordnung zu den Fluiddruckspeicheranordnungen 64, 66 aufweist. Der Torsionsschwingungsdämpfer 10 ist hier jedoch nicht in einem Nassraum, also einem Gehäuse, angeordnet. Über eine Drehdurchführung 118 sind die Rückschlagventile 106, 108 in Verbindung mit dem Reservoir 110. Eine derartige Ausgestaltungsvariante ist besonders dann vorteilhaft, wenn als Anfahrelement 68 eine trockenlaufende Reibungskupplung vorhanden ist, also die Bereitstellung eines Nassraums grundsätzlich nicht erforderlich ist.

Weiter erkennt man in Fig. 15, dass die beiden Fluiddruckspeicheranordnungen 64, 66 hier mehrere, im gezeigten Beispiel jeweils zwei, Fluiddruckspeichereinheiten 20', 20" aufweisen, und dass in den Fluidströmungswegen 78 bzw. auch 80 Drosselanordnungen 90 vorgesehen sein können.

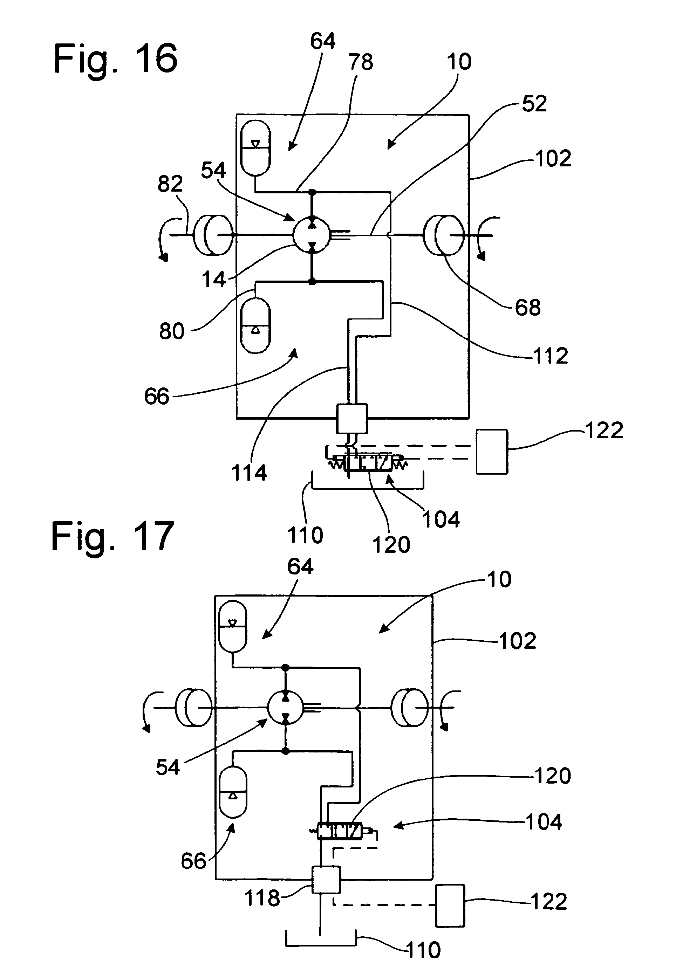

Bei den vorangehend beschriebenen Ausgestaltungsvarianten ist die Ventilanordnung 104, die druckabhängig schaltende Rückschlagventile, ein Wegeventil oder auch in Zuordnung zu den beiden Druckfluidspeicheranordnungen 2/2-Wegeventile aufweisen kann, jeweils im rotierenden Systembereich, also an der Primärseite oder der Sekundärseite vorgesehen. Die Fig. 16 zeigt eine Ausgestaltungsvariante, bei welcher die Ventilanordnung 104, hier wieder umfassend ein Wegeventil 120, außerhalb des Gehäuses 102 angeordnet ist, welches hier auch das Anfahrelement 68 enthält. Die Ventilanordnung 104, also das Wegeventil 120, steht unter der Ansteuerung einer Ansteueranordnung 122. Diese Ansteueranordnung 122 kann dazu ausgebildet sein, das Wegeventil 120 abhängig von den in den Fluidströmungswegen 78, 80 vorherrschenden Druckverhältnissen zu schalten, wozu eine Erfassung des Drucks erforderlich ist und eine Übermittlung der Drucksignale an die Ansteueranordnung 122. Grundsätzlich ist es jedoch auch möglich, die Ventilanordnung 102 abhängig vom Relativdrehzustand der Primärseite 14 bezüglich der Sekundärseite 52 anzusteuern. Hierzu können der Primärseite 14 und der Sekundärseite 52 jeweilige Drehwinkelsensoren oder Drehgeber zugeordnet sein, die deren Drehlage und mithin auch Relativdrehlage und Relativdrehgeschwindigkeit enthaltende Information bereitstellen. Je nachdem, in welcher Relativdrehrichtung bzw. auch mit welcher Relativdrehgeschwindigkeit die Primärseite 14 und die Sekundärseite 52 sich bewegen, kann darauf geschlossen werden, dass die Zahnradpumpe 54 erstes Fluid in einen der Fluidströmungswege 78, 80 fördert, also dort der Druck ansteigt, während im anderen Fluidströmungsweg der Druck abnimmt. Dementsprechend kann die Ansteueranordnung 122 dann das Wegeventil 120 so steuern, dass es denjenigen Fluidströmungsweg, dessen Druck abnimmt, mit dem Reservoir 110 verbindet, die Verbindung des anderen Fludiströmungswegs zum Reservoir 110 jedoch unterbindet.

Weiterhin wird es bei einer derartigen durch verschiedene Parameter beeinflussbaren Betriebscharakteristik möglich, beispielsweise in der Startphase oder beim Abstellen eines Antriebsaggregats das Wegeventil 120 in seine mittige, also neutrale Lage zu bringen, und somit dafür sorgen, dass keiner der Fluidströmungswege 78, 80 mit dem Reservoir 110 verbunden ist. Auch hier ist es wieder möglich, dass in dieser neutralen Stellung des Wegeventils 120 die beiden Verbindungsleitungen 112, 114 zum Erzeugen einer Dämpfungswirkung miteinander gekoppelt werden.

Die Ansteuerung des Wegeventils 120 durch die Ansteueranordnung 122 kann auf elektrischem Wege erfolgen, so dass das Wegeventil 120 elektromagnetisch wirkend aufgebaut ist. Selbstverständlich kann hier jedoch auch eine druckmäßige Ansteuerung durch ein Druckfluid erzeugt werden, so dass der Ansteuerbefehl der Ansteueranordnung 122 jeweils durch einen entsprechenden Fluiddruck des Ansteuerdruckfluids erzeugt wird.

Die Fig. 17 zeigt eine Ausgestaltungsvariante, bei welcher die Ansteuerung des Wegeventils 120 wieder über eine Ansteueranordnung 122 erfolgt. Das Wegeventil 120 ist jedoch nunmehr im Gehäuse 102 angeordnet, so dass die Drehdurchführung 118 auch dazu dient, Ansteuerbefehle von der Ansteueranordnung 122 zum Wegeventil 120 zu leiten. Auch hier kann die Ansteuerung auf elektrischem Wege erfolgen, so dass die Drehdurchführung 118 dann auch einen elektrischen Drehdurchführungsteil aufweist, oder kann durch den Druckfluid erfolgen, welches über die Drehdurchführung 118 geleitet wird. Hier ist also das Wegeventil 120 der Ventilanordnung 104 wieder im rotierenden Systembereich, insbesondere im Gehäuse 102 angeordnet.

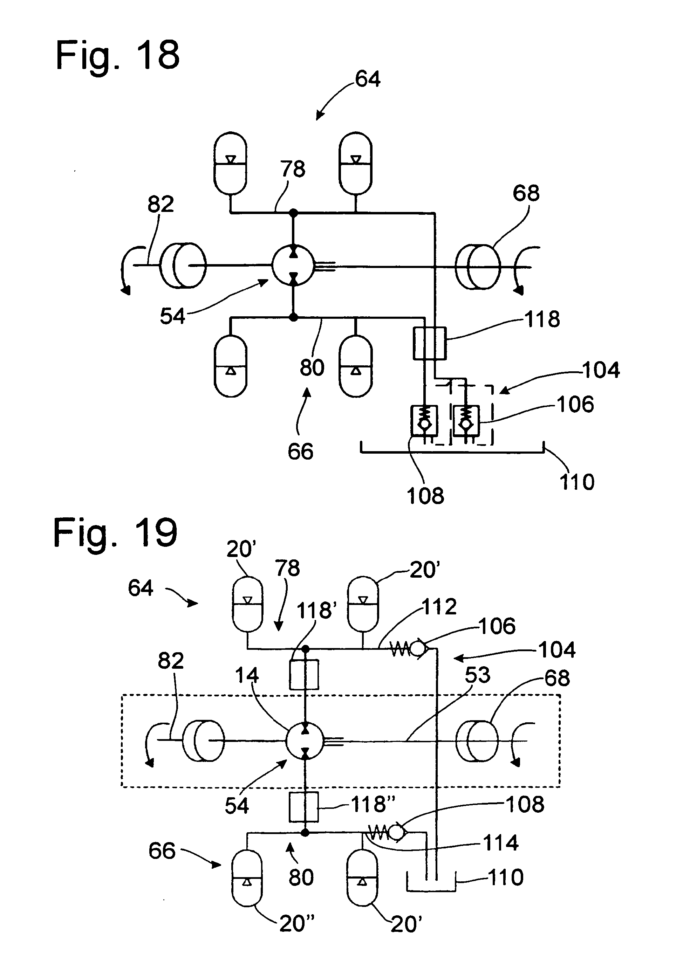

Die Fig. 18 zeigt eine Ausgestaltungsvariante, welche der in Fig. 15 Dargestellten gleicht. Man erkennt jedoch, dass die beiden druckabhängig schaltenden Rückschlagventile 106, 108 nunmehr im nicht rotierenden Systembereich angeordnet sind und über die Drehdurchführung 118 an die beiden Fluidströmungswege 78 bzw. 80 angekoppelt sind. Neben den beiden Rückschlagventilen 106, 108 der Ventilanordnung 104 ist hier auch das Reservoir 110 im nicht rotierenden Systembereich positioniert.

Die Fig. 19 zeigt eine Ausgestaltungsvariante, bei welcher sowohl die Ventilanordnung 104, hier die beiden Rückschlagventile 106, 108, die selbstverständlich wieder druckabhängig schalten können, so wie vorangehend dargelegt, als auch das Reservoir 110, als auch die Druckfluidspeichereinheiten 20', 20" der beiden Druckfluidspeicheranordnungen 64, 66 im nicht rotierenden Systembereich angeordnet sind. Im rotierenden Systembereich liegt im Wesentlichen nur die Fluidförderanordnung 54, also beispielsweise die Zahnradpumpe 54, die so aufgebaut sein kann, wie vorangehend mit Bezug auf die Fig. 1 erläutert. Über eine Drehdurchführung 118, die hier mit zwei Drehdurchführungsbereichen 118' bzw. 118" dargestellt ist, und die mit diesen Bereichen jeweils im Fluidströmungsweg 78 bzw. 80 liegt, sind die Druckfluidspeichereinheiten 20', 20" in Verbindung mit der Zahnradpumpe 54, so dass sich wieder die vorangehend erläuterte Funktionalität ergibt.

Ein besonderer Vorteil dieser Ausgestaltungsvariante liegt darin, dass somit eine räumliche Entkopplung der wesentlichen Teile der beiden Druckfluidspeicheranordnungen 64, 66 von der Fluidförderanordnung und allen rotierenden Systembereichen möglich wird, so dass deren Unterbringung dort, wo in einem Fahrzeug ausreichend Bauraum zur Verfügung steht, möglich wird.

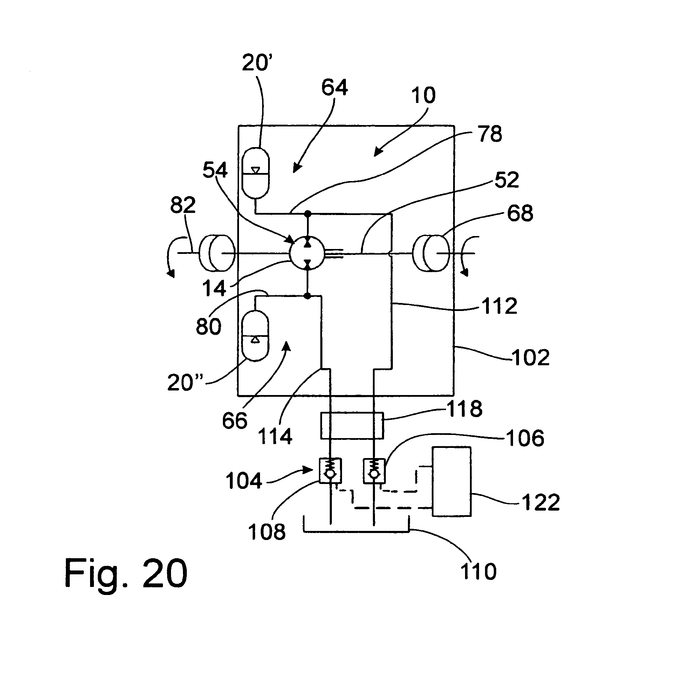

Eine weitere Ausgestaltungsform ist in Fig. 20 gezeigt. Man erkennt hier, dass die Ventilanordnung 104 außerhalb des rotierenden Systembereichs, also hier außerhalb des Gehäuses 102 angeordnet ist. Die Ventilanordnung 104 umfasst zwei schaltbare Rückschlagventile 106, 108. Es sei darauf hingewiesen, dass selbstverständlich die Ventilanordnung 104 auch hier andere Ventileinheiten umfassen kann, die unter der Ansteuerung der Ansteueranordnung 122 unabhängig voneinander in der Lage sind, eine Verbindung einer jeweiligen Verbindungsleitung 112, 114 und somit auch des zugeordneten Fluidströmungswegs 78 bzw. 80 mit dem Reservoir 110 herzustellen.

Durch die Möglichkeit, die beiden Fluidströmungswege 78, 80 auch gleichzeitig mit dem Reservoir 110 verbinden zu können, kann eine Situation geschaffen werden, bei welcher die als Fluidförderanordnung wirksame Zahnradpumpe 54 Fluid beispielsweise über die Verbindungsleitung 114, den Fluidströmungsweg 80, den Fluidströmungsweg 78 und die Verbindungsleitung 112 umwälzt, ohne in einer der Fluiddruckspeicheranordnungen 64, 66 eine Druckerhöhung zu generieren. Ist dabei beispielsweise in einem im Antriebsstrang folgenden Getriebe ein Gang eingelegt, also die Sekundärseite 52 des Torsionsschwingungsdämpfers 10 gegen Drehung im Wesentlichen festgehalten, und wird die Primärseite 14 durch die Antriebswelle 82 zur Drehung angetrieben, so wird über den Torsionsschwingungsdämpfer 10 im Wesentlichen kein Drehmoment übertragen. Ein Fahrzeug bleibt also im Stillstand.

Soll das Fahrzeug anfahren, kann beispielsweise dann, wenn die Zahnradpumpe 54 erstes Fluid in den Fluidströmungsweg 78 fördert, zunächst das Rückschlagventil 106 so angesteuert werden, dass es den Strömungsweg allmählich abschließt, so dass ein Rückfördern des ersten Fluids in das Reservoir 110 nicht möglich ist. Es steigt der Druck im Fluidströmungsweg 78 an und die bzw. alle Fluiddruckspeichereinheiten 20 werden verstärkt belastet und speichern Fluiddruck. Damit steigt auch das Drehmomentübertragungsvermögen des Torsionsschwingungsdämpfers 10, so dass, ähnlich wie beim Schließen einer Reibungskupplung, durch das allmählich ansteigende, übertragene Drehmoment das Fahrzeug anfahren wird. Es kann verzögert oder gleichzeitig auch das andere Rückschlagventil 108 in seine Schließstellung gebracht werden, so dass dann auftretende Drehmomentschwingungen in beiden Richtungen aufgenommen werden können. Im Fahrbetrieb kann die Ventilanordnung 104 dann so angesteuert werden, wie vorangehend dargelegt, um die Schwingungsdämpfungscharakteristik des Torsionsschwingungsdämpfers 10 den Erfordernissen anzupassen.

Es sei abschließend noch einmal darauf hingewiesen, dass bei den verschiedenen vorangehend beschriebenen bzw. auch in den Figuren dargestellten Ausgestaltungsvarianten eines Torsionsschwingungsdämpfers selbstverständlich die Zahl der jeweils bei den Fluiddruckspeicheranordnungen vorhandenen Fluiddruckspeichereinheiten sowie auch deren Fluiddruckspeichercharakteristik jeweils angepasst an die konkrete Anforderung in einem Antriebssystem ausgewählt werden kann. Auch die Auswahl der Fluidförderanordnung kann abhängig vom konkreten Einsatzzweck getroffen werden, wobei die dargestellte Zahnradpumpe aufgrund des einfachen Aufbaus und aufgrund der hinsichtlich des Drehwinkels zwischen Primärseite und Sekundärseite unbegrenzten Relativdrehbarkeit als besonders vorteilhaft zu betrachten ist. Insbesondere ist es hier vorteilhaft, Zahnradpumpen mit vergleichsweise kleiner Gesamtzähnezahl einzusetzen, wodurch die Spaltverluste im Übergang zwischen den einzelnen Zähnen verringert werden können. Eine nach dem "Roots-Prinzip" arbeitende Pumpe, bei welcher immer nur einzelne Zähne in Eingriff stehen, ist auch aufgrund des deutlich geringeren Dichtungsaufwands besonders vorteilhaft. Um die Druckverluste zwischen der Saugseite und der Druckseite einer derartigen Pumpe so weit als möglich zu verringern, können, wie vorangehend mit Bezug auf die Fig. 4 auch dargelegt, die einzelnen Zähne sowohl in axialer Richtung bezüglich des diese aufnehmenden Gehäuses, insbesondere also des Zentralkörpers und an diesen angrenzende Abschlusspllatten oder dergleichen, als auch bezüglich einander durch jeweilige Dichtungselemente abgeschlossen werden.

## Patentansprüche

1. Torsionsschwingungsdämpfer, insbesondere für den Antriebsstrang eines Fahrzeugs, umfassend eine Primärseite (14) und eine gegen die Wirkung einer Dämpferanordnung bezüglich der Primärseite (14) um eine Drehachse (A) drehbare Sekundärseite (52), wobei die Dämpferanordnung zwei Fluiddruckspeicheranordnungen (64, 66) sowie eine Förderanordnung (54) umfasst, welche durch Relativdrehung der Primärseite (14) bezüglich der Sekundärseite (52) in einer ersten Relativdrehrichtung den Fluidspeicherdruck in einer ersten der Fluiddruckspeicheranordnung (64, 66) erhöht und bei Relativdrehung der Primärseite (14) bezüglich der Sekundärseite (52) in einer der ersten Relativdrehrichtung entgegengesetzten zweiten Relativdrehrichtung den Fluidspeicherdruck in einer zweiten der Fluiddruckspeicheranordnungen (64, 66) erhöht, wobei jede Fluiddruckspeicheranordnung (64, 66) wenigstens eine Fluiddruckspeichereinheit (20', 20") mit durch die Förderanordnung (54) förderbarem erstem Fluid umfasst, wobei bei wenigstens einer Fluiddruckspeicheranordnung (64, 66) ein Fluidströmungsweg (78, 80) des ersten Fluids zwischen der Förderanordnung (54) und wenigstens einer Fluiddruckspeichereinheit (20', 20") über eine Ventilanordnung (104) in und außer Verbindung mit einem Reservoir (110) für erstes Fluid bringbar ist,
**dadurch gekennzeichnet,**
**dass** die Ventilanordnung (104) in Abhängigkeit des Drucks des ersten Fluids in dem Fluidströmungsweg (78, 80) zwischen der Förderanordnung (54) und wenigstens einer Fluiddruckspeichereinheit (20', 20") der anderen Fluiddruckspeicheranordnung (64, 66) schaltbar ist,
oder/und
**dass** die Ventilanordnung (104) in Abhängigkeit von der Relativdrehung der Primärseite (14) bezüglich der Sekundärseite (52) schaltbar ist.

2. Torsionsschwingungsdämpfer nach Anspruch 1,
**dadurch gekennzeichnet, dass** dann, wenn der Druck des ersten Fluids im Fluidströmungsweg (78, 80) der anderen Fluiddruckspeicheranordnung (64, 66) unter dem Druck des ersten Fluids in dem Fluidströmungsweg (78, 80) der einen Fluiddruckspeicheranordnung (64, 66) liegt, die Ventilanordnung (104) die Verbindung zwischen dem Fluidströmungsweg (78, 80) der einen Fluiddruckspeicheranordnung (64, 66) und dem Reservoir (110) unterbricht.

3. Torsionsschwingungsdämpfer nach Anspruch 2,
**dadurch gekennzeichnet, dass** die Ventilanordnung (104) die Verbindung zwischen dem Fluidströmungsweg (78, 80) der anderen Fluiddruckspeicheranordnung (64, 66) und dem Reservoir (110) freigibt.

4. Torsionsschwingungsdämpfer nach einem der Ansprüche 1 bis 3,
**dadurch gekennzeichnet, dass** das Reservoir (110) in einem die Primärseite (14) und die Sekundärseite (52) wenigstens teilweise enthaltenden Gehäuse (102) gebildet ist.

5. Torsionsschwingungsdämpfer nach einem der Ansprüche 1 bis 4,
**dadurch gekennzeichnet, dass** das Reservoir (110) über eine Drehdurchführung (118) in Verbindung mit dem Fluidströmungsweg (78, 80) wenigstens einer Fluiddruckspeicheranordnung (64, 66) in Verbindung steht oder bringbar ist.

6. Torsionsschwingungsdämpfer nach einem der Ansprüche 1 bis 5,
**dadurch gekennzeichnet, dass** die Ventilanordnung (104) an der Primärseite (14) oder der Sekundärseite (52) vorgesehen ist.

7. Torsionsschwingungsdämpfer nach einem der Ansprüche 1 bis 6,
**dadurch gekennzeichnet, dass** die Ventilanordnung (104) nicht mit der Primärseite (14) und der Sekundärseite (52) um die Drehachse (A) rotiert.

8. Torsionsschwingungsdämpfer nach einem der Ansprüche 1 bis 7,
**dadurch gekennzeichnet, dass** die Ventilanordnung (104) in Zuordnung zu jeder Fluiddruckspeicheranordnung (64, 66) eine Ventileinheit (106, 108) umfasst.

9. Torsionsschwingungsdämpfer nach einem der Ansprüche 1 bis 8,
**dadurch gekennzeichnet, dass** die Ventilanordnung (104) eine die Verbindung zwischen den Fluidströmungswegen (78, 80) der beiden Fluiddruckspeicheranordnungen (64, 66) und dem Reservoir (110) herstellende und unterbrechende Ventileinheit (120) umfasst.

10. Torsionsschwingungsdämpfer nach einem der Ansprüche 1 bis 9,
**dadurch gekennzeichnet, dass** wenigstens eine Fluiddruckspeichereinheit (20', 20") ferner durch das erste Fluid belastbares, komprimierbares zweites Fluid umfasst.

11. Torsionsschwingungsdämpfer nach einem der Ansprüche 1 bis 10,
**dadurch gekennzeichnet, dass** die Fluidförderanordnung (54) eine durch Relativdrehung (14) der Primärseite bezüglich der Sekundärseite (52) aktivierbare Pumpanordnung (54) umfasst, deren Förderrichtung von der Relativdrehrichtung zwischen der Primärseite (14) und der Sekundärseite (52) abhängt.

12. Torsionsschwingungsdämpfer nach einem der Ansprüche 1 bis 11,
**dadurch gekennzeichnet, dass** die Fluidförderanordnung (54) in einem unbegrenzten Relativdrehwinkelbereich zwischen Primärseite (14) und Sekundärseite (52) arbeitet.

13. Torsionsschwingungsdämpfer nach Anspruch 12,
**dadurch gekennzeichnet, dass** die Fluidförderanordnung (54) eine Zahnradpumpe (54) oder eine Flügelzellenpumpe umfasst.

14. Torsionsschwingungsdämpfer nach Anspruch 12 oder 13,
**dadurch gekennzeichnet, dass** die Fluiddruckspeichereinheiten (20', 20") der Fluiddruckspeicheranordnungen (64, 66) die Fluidförderanordnung (54) sternartig umgebend angeordnet sind.

15. Torsionsschwingungsdämpfer nach einem der Ansprüche 1 bis 14,
**dadurch gekennzeichnet, dass** die Fluiddruckspeicher einheiten (20',20") durch das erste Fluid belastbares, komprimierbares zweites Fluid umfassen und dass von wenigstens einer Fluiddruckspeichereinheit (20') der ersten Fluiddruckspeicheranordnung (64) und wenigstens einer Fluiddruckspeichereinheit (20") der zweiten Fluiddruckspeicheranordnung (66) zweites Fluid enthaltende Volumina (44', 44") miteinander in Fluidaustauschverbindung stehen.

16. Torsionsschwingungsdämpfer nach Anspruch 15,
**dadurch gekennzeichnet, dass** wenigstens eine Fluiddruckspeicheranordnung (64, 66) wenigstens eine Fluiddruckspeichereinheit (20', 20") aufweist, deren zweites Fluid enthaltendes Volumen (44', 44") nicht in Fluidaustauschverbindung mit einem zweites Fluid enthaltenden Volumen (44', 44") einer Fluiddruckspeichereinheit (20', 20") der anderen Fluiddruckspeicheranordnung (64, 66) steht.

17. Torsionsschwingungsdämpfer nach Anspruch 15 oder 16,
**dadurch gekennzeichnet, dass** bei wenigstens einer Fluiddruckspeicheranordnung (64, 66) im Fluidströmungsweg (78, 80) des ersten Fluids zwischen der Förderanordnung (54) und wenigstens einer Fluiddruckspeichereinheit (20', 20") eine Drosselanordnung (90) vorgesehen ist.

18. Torsionsschwingungsdämpfer nach Anspruch 17,
**dadurch gekennzeichnet, dass** wenigstens die Fluiddruckspeichereinheiten (20', 20") der beiden Fluiddruckspeicheranordnungen, (64, 66) deren zweites Fluid enthaltende Volumina (44', 44") miteinander in Fluidaustauschverbindung stehen, jeweils ein das erste Fluid von dem zweiten Fluid trennendes und druckabhängig verlagerbares oder verformbares Trennelement (42', 42") umfassen.

19. Torsionsschwingungsdämpfer nach Anspruch 18,
**dadurch gekennzeichnet, dass** das Trennelement (42', 42") zwischen zwei Maximal-Verlagerungszuständen oder/und Maximal-Verformungszuständen bewegbar ist.

20. Verfahren zum Betreiben eines Torsionsschwingungsdämpfers nach einem der Ansprüche 1 bis 19 im Drehmomentübertragungsweg zwischen einem Antriebsaggregat (16) und einer Getriebeanordnung (70) in einer Anfahrphase, bei welchem Verfahren bei im Wesentlichen still stehendem Fahrzeug die Fluidstömungswege (78, 80) beider Fluiddruckspeicheranordnungen (64, 66) mit dem Reservoir (110) verbunden werden und zum Anfahren des Fahrzeugs die Ventilanordnung (104) zum Unterbrechen der Verbindung wenigstens eines Fluidströmungswegs (78, 80) mit dem Reservoir (110) angesteuert wird.

21. Verfahren nach Anspruch 20,
**dadurch gekennzeichnet, dass** die Ventilanordnung (104) zum Unterbrechen der Verbindung desjenigen Fluidströmungswegs (78, 80) mit dem Reservoir (110) angesteuert wird, in welchen die Fluidförderanordnung (54) bei im Wesentlichen still stehendem Fahrzeug Fluid fördert.

## Claims

1. Torsional vibration damper, in particular for the drive train of a vehicle, comprising a primary side (14) and a secondary side (52) rotatable about an axis of rotation (A) with respect to the primary side (14) counter to the reaction of a damper arrangement, the damper arrangement comprising two fluid-pressure accumulator arrangements (64, 66) and a conveying arrangement (54) which, as a result of relative rotation of the primary side (14) with respect to the secondary side (52) in a first relative rotation direction, increases the fluid accumulator pressure in a first of the fluid-pressure accumulator arrangements (64, 66) and, in the case of relative rotation of the primary side (14) with respect to the secondary side (52) in a second relative rotation direction opposite to the first relative rotation direction, increases the fluid accumulator pressure in a second of the fluid-pressure accumulator arrangements (64, 66), each fluid-pressure accumulator arrangement (64, 66) comprising at least one fluid-pressure accumulator unit (20', 20") with first fluid conveyable by the conveying arrangement (54), in the case of at least one fluid-pressure accumulator arrangement (64, 66) a fluid flow path (78, 80) of the first fluid between the conveying arrangement (54) and at least one fluid-pressure accumulator unit (20', 20") being capable of being connected to and disconnected from a reservoir (110) for first fluid via a valve arrangement (104), **characterized in that** the valve arrangement (104) is switchable as a function of the pressure of the first fluid in the fluid flow path (78, 80) between the conveying arrangement (54) and at least one fluid-pressure accumulator unit (20', 20") of the other fluid-pressure accumulator arrangement (64, 66), and/or in that the valve arrangement (104) is switchable as a function of the relative rotation of the primary side (14) with respect to the secondary side (52).

2. Torsional vibration damper according to Claim 1, **characterized in that**, when the pressure of the first fluid in the fluid flow path (78, 80) of the other fluid-pressure accumulator arrangement (64, 66) lies below the pressure of the first fluid in the fluid flow path (78, 80) of the one fluid-pressure accumulator arrangement (64, 66), the valve arrangement (104) breaks the connection between the fluid flow path (78, 80) of the one fluid-pressure accumulator arrangement (64, 66) and the reservoir (110).

3. Torsional vibration damper according to Claim 2, **characterized in that** the valve arrangement (104) releases the connection between the fluid flow path (78, 80) of the other fluid-pressure accumulator arrangement (64, 66) and the reservoir (110).

4. Torsional vibration damper according to one of Claims 1 to 3, **characterized in that** the reservoir (110) is formed in a housing (102) at least partially containing the primary side (14) and the secondary side (52).

5. Torsional vibration damper according to one of Claims 1 to 4, **characterized in that** the reservoir (110) is connected or connectable to the fluid flow path (78, 80) of at least one fluid-pressure accumulator arrangement (64, 66) via a rotary leadthrough (118).

6. Torsional vibration damper according to one of Claims 1 to 5, **characterized in that** the valve arrangement (104) is provided on the primary side (14) or the secondary side (52).

7. Torsional vibration damper according to one of Claims 1 to 6, **characterized in that** the valve arrangement (104) does not rotate about the axis of rotation (A) with the primary side (14) and the secondary side (52).

8. Torsional vibration damper according to one of Claims 1 to 7, **characterized in that** the valve arrangement (104) comprises a valve unit (106, 108) assigned to each fluid-pressure accumulator arrangement (64, 66).

9. Torsional vibration damper according to one of Claims 1 to 8, **characterized in that** the valve arrangement (104) comprises a valve unit (120) making and breaking the connection between the fluid flow paths (78, 80) of the two fluid-pressure accumulator arrangements (64, 66) and the reservoir (110).

10. Torsional vibration damper according to one of Claims 1 to 9, **characterized in that** at least one fluid-pressure accumulator unit (20', 20") comprises, furthermore, compressible second fluid loadable by the first fluid.

11. Torsional vibration damper according to one of Claims 1 to 10, **characterized in that** the fluid-conveying arrangement (54) comprises a pumping arrangement (54) which is activatable as a result of relative rotation (14) of the primary side with respect to the secondary side (52) and the conveying direction of which depends on the relative rotation direction between the primary side (14) and the secondary side (52).

12. Torsional vibration damper according to one of Claims 1 to 11, **characterized in that** the fluid-conveying arrangement (54) operates in an unlimited relative rotation angle range between primary side (14) and secondary side (52).

13. Torsional vibration damper according to Claim 12, **characterized in that** the fluid-conveying arrangement (54) comprises a gear pump (54) or a vane pump.

14. Torsional vibration damper according to Claim 12 or 13, **characterized in that** the fluid-pressure accumulator units (20', 20") of the fluid-pressure accumulator arrangements (64, 66) are arranged so as to surround the fluid-conveying arrangement (54) in a star-like manner.

15. Torsional vibration damper according to one of Claims 1 to 14, **characterized in that** the fluid-pressure accumulator units (20', 20") comprise compressible second fluid loadable by the first fluid, and **in that** volumes (44', 44"), containing second fluid, of at least one fluid-pressure accumulator unit (20') of the first fluid-pressure accumulator arrangement (64) and at least one fluid-pressure accumulator unit (20") of the second fluid-pressure accumulator arrangement (66) are in fluid-exchange connection with one another.

16. Torsional vibration damper according to Claims 15, **characterized in that** at least one fluid-pressure accumulator arrangement (64, 66) has at least one fluid-pressure accumulator unit (20', 20"), of which the volume (44', 44") containing second fluid does not engage in fluid-exchange connection with a volume (44', 44"), containing second fluid, of a fluid-pressure accumulator unit (20', 20") of the other fluid-pressure accumulator arrangement (64, 66).

17. Torsional vibration damper according to Claim 15 or 16, **characterized in that**, in the case of at least one fluid-pressure accumulator arrangement (64, 66), a throttle arrangement (90) is provided in the fluid flow path (78, 80) of the first fluid between the conveying arrangement (54) and at least one fluid-pressure accumulator unit (20', 20").

18. Torsional vibration damper according to Claim 17, **characterized in that** at least the fluid-pressure accumulator units (20', 20") of the two fluid-pressure accumulator arrangements (64, 66), of which the volumes (44', 44") containing second fluid are in fluid-exchange connection with one another, comprise in each case a separation element (42', 42") separating the first fluid from the second fluid and displaceable or deformable as a function of the pressure.

19. Torsional vibration damper according to Claim 18, **characterized in that** the separation element (42', 42") is movable between two maximum displacement states and/or maximum deformation states.

20. Method for operating a torsional vibration damper according to one of Claims 1 to 19 in the torque transfer path between a drive assembly (16) and a transmission arrangement (70) in a starting phase, in which method, with the vehicle essentially stationary, the fluid flow paths (78, 80) of both fluid-pressure accumulator arrangements (64, 66) are connected to the reservoir (110) and, to start the vehicle, the valve arrangement (104) is activated so as to break the connection between at least one fluid flow path (78, 80) and the reservoir (110).

21. Method according to Claim 20, **characterized in that** the valve arrangement (104) is activated so as to break the connection between that fluid flow path (78, 80) and the reservoir (110), into which path the fluid-conveying arrangement (54) conveys fluid when the vehicle is essentially stationary.

## Revendications

1. Amortisseur de vibrations de torsion, en particulier pour la chaîne cinématique d'un véhicule, comprenant un côté primaire (14) et un côté secondaire (52) pouvant tourner autour d'un axe de rotation (A) à l'encontre de l'action d'un agencement d'amortisseur par rapport au côté primaire (14), l'agencement d'amortisseur comprenant deux agencements accumulateurs de pression de fluide (64, 66) ainsi qu'un agencement de refoulement (54), qui, par rotation relative du côté primaire (14) par rapport au côté secondaire (52) dans un premier sens de rotation relative, augmente la pression de l'accumulateur de fluide dans un premier des agencements accumulateurs de pression de fluide (64, 66), et lors de la rotation relative du côté primaire (14) par rapport au côté secondaire (52) dans un deuxième sens de rotation relative opposé au premier sens de rotation relative, augmente la pression d'accumulateur de fluide dans un deuxième des agencements accumulateurs de pression de fluide (64, 66), chaque agencement accumulateur de pression de fluide (64, 66) comprenant au moins une unité accumulatrice de pression de fluide (20', 20") avec un premier fluide pouvant être refoulé par l'agencement de refoulement (54), une voie d'écoulement de fluide (78, 80) du premier fluide entre l'agencement de refoulement (54) et au moins une unité accumulatrice de pression de fluide (20', 20") pouvant, dans le cas d'au moins un agencement accumulateur de pression de fluide (64, 66), être amenée par le biais d'un agencement de soupape (104) en liaison et hors de liaison avec un réservoir (110) pour un premier fluide, **caractérisé en ce que**
l'agencement de soupape (104) peut être commuté en fonction de la pression du premier fluide dans la voie d'écoulement de fluide (78, 80) entre l'agencement de refoulement (54) et au moins une unité accumulatrice de pression de fluide (20', 20") de l'autre agencement accumulateur de pression de fluide (64, 66),
et/ou
**en ce que** l'agencement de soupape (104) peut être commuté en fonction de la rotation relative du côté primaire (14) par rapport au côté secondaire (52).

2. Amortisseur de vibrations de torsion selon la revendication 1, **caractérisé en ce que** lorsque la pression du premier fluide dans la voie d'écoulement de fluide (78, 80) de l'autre agencement accumulateur de pression de fluide (64, 66) est inférieure à la pression du premier fluide dans la voie d'écoulement de fluide (78, 80) de l'un des agencements accumulateurs de pression de fluide (64, 66), l'agencement de soupape (104) interrompt la connexion entre la voie d'écoulement de fluide (78, 80) de l'un des agencements accumulateurs de pression de fluide (64, 66) et le réservoir (110).

3. Amortisseur de vibrations de torsion selon la revendication 2, **caractérisé en ce que** l'agencement de soupape (104) libère la connexion entre la voie d'écoulement de fluide (78, 80) de l'autre agencement accumulateur de pression de fluide (64, 66) et le réservoir (110).

4. Amortisseur de vibrations de torsion selon l'une quelconque des revendications 1 à 3, **caractérisé en ce que** le réservoir (110) est formé dans un boîtier (102) contenant au moins en partie le côté primaire (14) et le côté secondaire (52).

5. Amortisseur de vibrations de torsion selon l'une quelconque des revendications 1 à 4, **caractérisé en ce que** le réservoir (110) est en liaison ou peut être amené en liaison par le biais d'un passage rotatif (118) avec la voie d'écoulement de fluide (78, 80) d'au moins un agencement accumulateur de pression de fluide (64, 66).

6. Amortisseur de vibrations de torsion selon l'une quelconque des revendications 1 à 5, **caractérisé en ce que** l'agencement de soupape (104) est prévu sur le côté primaire (14) ou sur le côté secondaire (52).

7. Amortisseur de vibrations de torsion selon l'une quelconque des revendications 1 à 6, **caractérisé en ce que** l'agencement de soupape (104) ne tourne pas avec le côté primaire (14) et le côté secondaire (52) autour de l'axe de rotation (A).

8. Amortisseur de vibrations de torsion selon l'une quelconque des revendications 1 à 7, **caractérisé en ce que** l'agencement de soupape (104) comprend une unité de soupape (106, 108) associée à chaque agencement accumulateur de pression de fluide (64, 66).

9. Amortisseur de vibrations de torsion selon l'une quelconque des revendications 1 à 8, **caractérisé en ce que** l'agencement de soupape (104) comprend une unité de soupape (120) établissant et interrompant la connexion entre les voies d'écoulement de fluide (78, 80) des deux agencements accumulateurs de pression de fluide (64, 66) et le réservoir (110).

10. Amortisseur de vibrations de torsion selon l'une quelconque des revendications 1 à 9, **caractérisé en ce qu'**au moins une unité accumulatrice de pression de fluide (20', 20") comprend en outre un deuxième fluide pouvant être comprimé et pouvant être sollicité par le premier fluide.

11. Amortisseur de vibrations de torsion selon l'une quelconque des revendications 1 à 10, **caractérisé en ce que** l'agencement de refoulement de fluide (54) comprend un agencement de pompe (54) pouvant être activé par rotation relative (14) du côté primaire par rapport au côté secondaire (52), dont le sens de refoulement dépend du sens de rotation relatif entre le côté primaire (14) et le côté secondaire (52).

12. Amortisseur de vibrations de torsion selon l'une quelconque des revendications 1 à 11, **caractérisé en ce que** l'agencement de refoulement de fluide (54) fonctionne dans une plage angulaire de rotation relative illimitée entre le côté primaire (14) et le côté secondaire (52).

13. Amortisseur de vibrations de torsion selon la revendication 12, **caractérisé en ce que** l'agencement de refoulement de fluide (54) comprend une pompe à engrenages (54) ou une pompe à palettes.

14. Amortisseur de vibrations de torsion selon la revendication 12 ou 13, **caractérisé en ce que** les unités accumulatrices de pression de fluide (20', 20") des agencements accumulateurs de pression de fluide (64, 66) sont disposées de manière à entourer en forme d'étoile l'agencement de refoulement de fluide (54).

15. Amortisseur de vibrations de torsion selon l'une quelconque des revendications 1 à 14, **caractérisé en ce que** les unités accumulatrices de pression de fluide (20', 20") comprennent un deuxième fluide pouvant être comprimé et pouvant être sollicité par le premier fluide, et
**en ce que** des volumes (44', 44") contenant le deuxième fluide, d'au moins une unité accumulatrice de pression de fluide (20') du premier agencement accumulateur de pression de fluide (64) et d'au moins une unité accumulatrice de pression de fluide (20") du deuxième agencement accumulateur de pression de fluide (66), sont en liaison d'échange de fluide l'un avec l'autre.

16. Amortisseur de vibrations de torsion selon la revendication 15, **caractérisé en ce qu'**au moins un agencement accumulateur de pression de fluide (64, 66) présente au moins une unité accumulatrice de pression de fluide (20', 20"), dont le volume (44', 44") contenant un deuxième fluide n'est pas en liaison d'échange fluidique avec un volume (44', 44") contenant un deuxième fluide d'une unité accumulatrice de pression de fluide (20', 20") de l'autre agencement accumulateur de pression de fluide (64, 66).

17. Amortisseur de vibrations de torsion selon la revendication 15 ou 16, **caractérisé en ce qu'**un agencement d'étranglement (90) est prévu dans au moins un agencement accumulateur de pression de fluide (64, 66) dans la voie d'écoulement de fluide (78, 80) du premier fluide entre l'agencement de refoulement (54) et au moins une unité accumulatrice de pression de fluide (20', 20").

18. Amortisseur de vibrations de torsion selon la revendication 17, **caractérisé en ce qu'**au moins les unités accumulatrices de pression de fluide (20', 20") des deux agencements accumulateurs de pression (64, 66), dont les volumes (44', 44") contenant un deuxième fluide sont en liaison d'échange fluidique l'un avec l'autre, comprennent à chaque fois un élément de séparation (42', 42") séparant le premier fluide du deuxième fluide et déplaçable ou déformable en fonction de la pression.

19. Amortisseur de vibrations de torsion selon la revendication 18, **caractérisé en ce que** l'élément de séparation (42', 42") peut être déplacé entre deux états de décalage maximaux et/ou entre deux états de déformation maximaux.

20. Procédé pour faire fonctionner un amortisseur de vibrations de torsion selon l'une quelconque des revendications 1 à 19 dans la voie de transfert de couple entre un groupe motopropulseur (16) et un agencement de transmission (70) dans une phase de démarrage, dans lequel procédé, lorsque le véhicule est essentiellement à l'arrêt, les voies d'écoulement de fluide (78, 80) des deux agencements accumulateurs de pression de fluide (64, 66) sont connectées au réservoir (110) et, pour le démarrage du véhicule, l'agencement de soupape (104) est commandé de manière à interrompre la liaison d'au moins une voie d'écoulement de fluide (78, 80) au réservoir (110).

21. Procédé selon la revendication 20,
**caractérisé en ce que** l'agencement de soupape (104) est commandé pour interrompre la liaison de la voie d'écoulement de fluide (78, 80) au réservoir (110) dans laquelle l'agencement de refoulement de fluide (54) refoule du fluide lorsque le véhicule est essentiellement à l'arrêt.
